# EUROPÄISCHE PATENTSCHRIFT

(11) **EP 3 594 427 B1**
(45) Veröffentlichungstag und Bekanntmachung des Hinweises auf die Patenterteilung: **06.09.2023**
(21) Anmeldenummer: 18183544.8
(22) Anmeldetag: 13.07.2018
(51) Int. Cl.: E04F 13/08, E04B 2/96, F24S 25/35, F24S 20/66, F24S 25/37, F24S 25/632, F24S 25/00, H02S 20/26

(54) **SYSTEM UND VERFAHREN ZUR BEFESTIGUNG VON FASSADENELEMENTEN**
SYSTEM AND METHOD FOR FIXING FACADE ELEMENTS
SYSTÈME ET PROCÉDÉ DE FIXATION D'ÉLÉMENTS DE FAÇADE

(43) Veröffentlichungstag der Anmeldung: 15.01.2020
(73) Patentinhaber: GFT Fassaden AG, 9016 St. Gallen (CH)
(72) Erfinder: DÖRIG, Reto, 9016 St. Gallen (CH)
(74) Vertreter: Swisspat Riederer Hasler Patentanwälte AG

(56) Entgegenhaltungen:
- EP-A1- 2 982 812
- EP-A2- 2 576 939
- CH-A1- 713 372
- CN-U- 201 531 075
- US-A1- 2013 118 107

## Beschreibung

Die Erfindung betrifft ein System und ein Verfahren zur Befestigung von Fassadenelementen gemäss den Oberbegriffen den Ansprüchen 1 und 13.

### Stand der Technik

Auf dem Markt sind verschiedene Befestigungssysteme für Fassadenelemente bekannt. Diese haben jedoch den Nachteil, dass einzelne Fassadenelemente in der Regel nicht mehr so einfach herausgenommen werden können, resp. die Demontage von benachbarten Elementen nötig macht. Insbesondere bei Photovoltaikpaneelen, die immer öfters auch an Gebäudefassaden verbaut werden, ist es notwendig, dass man in der Lage ist, nachträglich einzelne defekte Paneele auszutauschen. Auch kann es erforderlich sein, hinter den Photovoltaikmodulen vorhandene, defekte Wechselrichter auszutauschen. Ein weiteres Problem stellt die Verkabelung der Photovoltaikmodule dar, die hinter den Modulen separat befestigt werden muss.

US Patentanmeldung Nr. 2013/0118107 offenbart ein Verkleidungssystem für äussere Gebäudewände mit einem Befestigungssystem gemäss dem Oberbegriff von Anspruch 1. Das Verkleidungssystem besteht aus einzelnen Platten, die mittels eines Befestigungssystem an einer Gebäudewand befestigt werden, das folgende Komponenten umfasst: Ankerplatten, untere und obere Adapter, Bodenauflagen und Kopfleisten und Montageprofile, die an der Gebäudewand befestigt werden. Jede Ankerplatte ist für den Eingriff mit einer oder mehreren Befestigungsvorrichtungen konfiguriert, mit denen mindestens ein unterer Apter an einer Ankerplatte in der Nähe einer Bodenkante jeder Platte befestigt ist, und mit denen mindestens ein oberer Adapter an der Ankerplatte in der Nähe einer oberen Kante jeder Platte befestigt ist. Das Verkleidungssystem umfasst ferner eine oder mehrere Bodenauflagen und eine oder mehrere Kopfleisten. Ein erster Kanal, der von einer vorderen Oberfläche jeder Bodenauflage vorsteht, ist so ausgebildet, dass er mindestens einen Teil einer Kante des unteren Adapters darin hält (oder damit in Eingriff steht). Jede Bodenauflage weist einen Einstellmechanismen auf, mit dem die Höhe der Platte relativ zur Bodenauflage einstellbar ist. Eine Rückseite jeder Bodenauflage ist zum Eingriff mit einer Vorderfläche eines an einer Wand befestigten Schwellenprofils konfiguriert.

Ein zweiter Kanal, der von der Vorderseite der oberen Kopfleiste vorragt, ist so ausgebildet, dass er darin mindestens einen Teil einer Kante des oberen Adapters hält (oder mit dieser in Eingriff steht). Die rückwärtige Seite jeder Kopfleiste ist zum Eingriff mit einer vorderen Seite eines oberen Montageprofils konfiguriert, das an der Gebäudewand befestigt ist. Ausserdem ist die Kopfleiste zusätzlich mit einer Schraube am oberen Montageprofil befestigt.

Die Bodenauflage ist zum Eingriff mit einer vorderen Seite eines unteren Montageprofils konfiguriert, das an der Gebäudewand befestigt ist. Ausserdem ist die Bodenauflage zusätzlich mit einer Schraube am unteren Montageprofil befestigt

Beim beschriebenen Verkleidungssystem werden zuerst die Ankerplatten an der Rückseite der zu montierenden Platten festgemacht. Danach werden an den Ankerplatten die oberen und unteren Adapter montiert. An der Gebäudewand werden in einem dem Abstand der unteren und oberen Adapter entsprechenden Abstand untere und obere Montageprofile angeschraubt. Danach werden die Kopfleisten und die Bodenauflagen an den Montageprofilen eingehängt und festgeschraubt. Zum Montieren einer Platte werden die Endstücke der oberen Adapter dann von schräg unten in einen ersten Kanal der Kopfleiste eingefahren. Danach kann die Platte in die vertikale Ebene verschwenkt, und das Endstück des unteren Adapters in einen zweiten Kanal der Bodenauflage eingehängt werden. Die Entnahme einer Platte erfolgt in umgekehrter Reihenfolge, d.h. zuerst wird die Platte senkrecht so weit nach oben geschoben, bis der untere Adapter nicht mehr im Eingriff des Kanals ist. Danach wird die Platte verschwenkt und schräg nach unten bewegt.

Der Vorteil des Verkleidungssystems der US 2013/0118107 ist, dass jeweils einzelne Platten einer Wandverkleidung ausgetauscht werden können. Ein weiterer Vorteil ist, dass die Neigung der Platten justiert werden kann, wenn diese bereits montiert sind. Allerdings eignet sich das System nicht für die Anbringung von Photovoltaik-Modulen an Gebäudefassaden, da ein Arbeiter allein nicht gleichzeitig die Platte einhängen und die elektrischen Leitungen anschliessen kann. Nachteilig am System ist auch, dass eine grössere Zahl verschiedener Bauteile nötig sind. Dies macht das System teuer und kompliziert.

### Aufgabe der Erfindung

Aufgabe der vorliegenden Erfindung ist es deshalb, ein System zur Befestigung von Fassadenelementen, insbesondere von Bekleidungselementen wie Glasscheiben oder Photovoltaikmodulen, an einer Fassade vorzuschlagen, das es erlaubt, einzelne defekte Fassadenelemente auszutauschen, ohne dass deswegen benachbarte Elemente ebenfalls demontiert werden müssen. Ein weiteres Ziel ist, ein Befestigungssystem vorzuschlagen, dass aus möglichst wenigen, unterschiedlichen Teil aufgebaut ist. Ein weiteres Ziel ist es, ein Befestigungssystem bereitzustellen, das es erlaubt, Fassadenelemente unterschiedlicher Grössen und Formen zu befestigen. Noch ein Ziel ist es, ein Befestigungssystem vorzuschlagen, das die Montage von Fassadenelementen im Bereich von stark auskragenden Dachrändern oder Fensterbänken erlaubt. Ein weiteres Ziel ist, dass die Fassadenelemente im Werk montagefertig vorbereitet werden können, sodass diese auf dem Bau nur noch an vormontierten Montageprofilen befestigt werden müssen. Noch ein Ziel ist es, ein Befestigungssystem vorzuschlagen, das speziell für die Montage von Photovoltaikmodulen an Fassaden geeignet ist und auch das nachträgliche Ersetzen von Modulen möglich macht, ohne dass benachbarte Module demontiert werden müssen. Ein weiteres Ziel ist, dass auch eine Lösung für die Anbringung von elektrischen Leitungen von Photovoltaikmodulen gefunden wird.

### Beschreibung

Die Erfindung betrifft ein System zur Befestigung von Fassadenelementen, insbesondere von Glasscheiben oder Photovoltaikmodulen, an einer Fassade mit an einer Gebäudewand angeordneten Montageprofilen. Mit Hilfe von Verbindungsmitteln, die einerseits mit der Rückseite der Fassadenelemente und andererseits mit den Tragschienen verbindbar sind, können die Fassadenelemente an den Montageprofilen befestigt werden.

Die Verbindungsmittel umfassen vorzugsweise folgende Komponenten:
- erste und zweite Montageprofile zur im Wesentlichen horizontalen Anordnung an einer Unterkonstruktion einer Gebäudewand,
- ein Befestigungsprofil zur Anordnung an der Rückseite eines Fassadenelementes,
- einen Anker zur lösbaren Anordnung am Befestigungsprofil, wobei das erste Montageprofil mit einem ersten Anker, der im Bereich der Unterkante des Fassadenelements am Befestigungsprofil anzubringen ist, eine erste Verbindung realisiert.

Das Befestigungssystem ist weiter dadurch charakterisiert, dass ein Schiebeteil am zweiten Montageprofil in Montageprofillängsrichtung verschieblich geführt ist, und in der Einbauposition mit einen zweiten Anker, der im Bereich der Oberkante des Fassadenelements an einem Befestigungsprofil angeordnet ist, eine zweite Verbindung realisiert.

Das erfindungsgemässe Befestigungssystem hat den Vorteil, dass es nur aus wenigen Teilen besteht und die Fassadenelemente bereits in der Fabrik mit den Befestigungsprofilen und gegebenenfalls Ankern ausgestattet werden können. Dadurch kann die Montage auf der Baustelle sehr rasch erfolgen.

Das erste resp. untere Montageprofil kann auch als Montageprofil einer ersten Art, und das zweite resp. obere Montageprofil als Montageprofil einer zweiten Art bezeichnet werden. Das Montageprofil der ersten Art ist dazu ausgelegt, um mit einem am Grund resp. unteren Rand des Fassadenelements angeordneten Anker zusammenzuwirken und das Gewicht des Fassadenelements abzutragen. Das Montageprofil der zweiten Art ist dazu ausgelegt, einen Schiebung resp. Schiebeteil aufzunehmen und in Längsrichtung des zweiten Montageprofils verschieblich zu halten. Der Anker ist ein Verbindungselement, das ausgelegt ist, um mit dem ersten Montageprofil und dem Schiebeteil jeweils eine Formschlussverbindung einzugehen, resp. mit diesen zu verhaken, sodass die Fassadenelemente gegen Windlasten senkrecht zur Fassadenfläche gesichert sind.

Erfindungsgemäss ist die erste Verbindung derart ausgebildet, dass ein Fassadenelement von einer schrägen Kippposition in eine senkrechte Einbauposition verschwenkbar ist. Dadurch ist die Montage wesentlich erleichtert, weil das Fassadenelement zuerst am unteren Montageprofil eingehängt werden kann. Analog ist auch die Demontage erleichtert. Sobald das Schiebeteil aus dem Eingriff des Ankers entfernt ist, kann das Fassadenelement verschwenkt werden und es kann in einer schrägen Kippposition verharren. In der schrägen Kippposition ist der Raum hinter dem Fassadenelement zugänglich es können beispielsweise Servicearbeiten durchgeführt werden, ohne dass das Fassadenelement vollständig entfernt werden müsste.

Erfindungsgemäss ist der erste Anker am ersten Montageprofil von schräg oben einhängbar. Dies hat den Vorteil, dass zur Herstellung der ersten Verbindung keine weiteren Werkzeuge erforderlich sind. Ausserdem kann ein Fassadenelement von einem einzelnen Arbeiter montiert werden kann, da er das Fassadenelement auf dem unteren (ersten) Montageprofil abstellen resp. einhängen kann.

Vorteilhaft sind die ersten und zweiten Verbindungen Formschlussverbindungen. Formschlussverbindungen haben den Vorteil, dass sie grossen Kräften widerstehen können und für die Realisierung keine Werkzeuge benötigt werden. Zweckmässigerweise ist im Abstand von der Oberkante des Schiebeteils ein beweglicher Bolzen in einer Bohrung aufgenommen. Der bewegliche Bolzen dient dazu, das Schiebeteil am zweiten (oberen) Montageprofil zu fixieren, wobei eine Verschiebung in Montageprofillängsrichtung immer noch möglich sein kann. Der bewegliche Bolzen kann mittels eines Federelements in eine Arretierposition vorgespannt sein, in welcher der Bolzen auf der Vorderseite des Schiebeteils vorsteht. Gemäss einer bevorzugten Ausführungsform sind der Anker und das Schiebeteil in der Einbau- und in der Kippposition des Fassadenelements miteinander verhakt derart, dass das Fassadenelement nicht herunterfallen kann. Eine solche Verbindung kann beispielsweise dadurch realisiert sein, dass der Anker einen Kanal mit einer Kanalöffnung mit Hinterschneidungen aufweist, wobei das Schiebeteil mit einem von einer Grundplatte beabstandeten Schenkel in den Kanal eingreift. Dadurch ist eine Formschlussverbindung realisert. Der Kanal ist dabei vorzugsweise so dimensioniert, dass der Schenkel des Ankers in einem Winkelbereich zwischen ungefähr 0 und 45 Grad in den Kanal eingreifen kann. Dadurch kann die Verhakung bestehen bleiben, wenn das Fassadenelement zwischen der Kippposition und der Einbauposition verschwenkt wird.

Vorteilhaft weist das Ende des Schenkels ein verbreiteren Fuss. Dies ist eine Möglichkeit, um im Zusammenwirken mit einer Nut oder einem Kanal mit Hinterschneidungen eine Formschluss-Verbindung mit Spiel zu realisieren.

In einer bevorzugten Ausführungsform ist in der vertikalen Einpauposition zwischen den Befestigungsprofilen und den Montageprofilen eine dritte Verbindung realisiert, welche einer seitlichen Verschiebung des Fassadenelements in Montageschienenlängsrichtung entgegenwirkt oder verhindert. Diese Verbindung kann mittels eines Federmittels, z.B. einer Blattfeder, realisiert sein, die am Befestigungsprofil angeordnet ist, vorzugsweise zusammen mit dem Anker. In der Einbauposition ist das Federmittel zwischen dem Befestigungs- und dem Montageprofil verklemmt resp. vorgespannt und sorgt so für eine verbesserte Reibschlussverbindung, die ein seitliches Verrutschen des Fassadenelements verhindert.

Vorteilhaft ist zwischen dem oberen Anker und dem Schiebeteil zusätzlich eine lösbare Verbindung, z.B. eine Rastverbindung, realisierbar, welche eine Relativverschiebung von Anker und Schiebeteil verhindert.

Vorteilhaft umfasst das Befestigungssystem noch ein drittes Montageprofil resp. Montageprofil einer dritten Art, das eine Kombination des ersten und zweiten Montageprofils ist. Dies erlaubt es, das gleiche Profil für die Befestigung von zwei übereinander Fassadenelementen zu verwenden.

Zweckmässigerweise sind zur Befestigung eines Fassadenelements an den Montageprofilen wenigstens vier Anker eingesetzt. Damit sind die die Fassadenelemente jeweils sicher an der Tragkonstruktion gehalten.

Vorteilhaft sind am zweiten Montageprofil Hinterschneidungen ausgebildet, durch welche das Schiebeteil in Montageprofillängsrichtung verschieblich gehalten ist. Die Hinterschneidungen können beispielsweise durch gegeneinander gerichtete Stege gebildet sein.

Gemäss einer besonders bevorzugten Ausführungsform sind ein erstes und zweites Befestigungsprofil vorgesehen, wobei das erste Befestigungsprofil zur vertikalen Anordnung an der Rückseite des Fassadenelements und ein zweites Befestigungsprofil zur horizontalen Anordnung an der Rückseite des Fassadenelements ausgelegt ist. Damit hat der Kunde/Monteur die Möglichkeit, die einzelnen Komponenten/Systemteile vormontiert zu erhalten oder alles selber am Bau zu montieren, wobei er dafür keine speziellen Werkzeuge braucht. Je nach Format der Fassadenelemente kann das eine oder das andere Befestigungsprofil eingesetzt werden. Müssen beispielsweise niedrige aber sehr breite Fassadenelemente montiert werden, dann eignet sich das horizontal anzuordnende Befestigungsprofil besser als das andere.

Vorteilhaft ist das Schiebeteil entlang einer Führung längsverschieblich im zweiten Montageprofil aufnehmbar. Dies ermöglicht es, das Schiebeteil bereits vorgängig am Montageprofil zu positionieren, sodass zur Herstellung der Formschussverbindung das Schiebeteil nur verschoben werden muss.

Zweckmässigerweise ist das Schiebeteil mittels einer Schraube, vorzugsweise Imbusschraube, am zweiten Montageprofil feststellbar. Die Schraube ist durch den zwischen zwei übereinander angeordneten Fassadenelementen vorhandenen, kleinen Spalt von 6 bis 10 mm gut zugänglich, sodass diese mit einem Schraubendreher wieder gelöst werden kann.

Vorteilhaft hat der Anker einen U-förmigen oder hakenförmigen Fuss. Dieser kann vorzugsweise mit einer Schiene oder Vorsprung des Montageprofils eine Formschlussverbindung eingehen, sodass das Element gegen Herunterfallen und Windsog gesichert ist.

Gemäss einer besonders vorteilhaften Ausführungsform hat der U- oder hakenförmige Fuss eine Anschlagfläche, um das Fassadenelement mit dem Montageprofil als Gegenlager in einer bestimmten Schwenklage festzustellen. Dies hat Vorteile bei der Montage und für Servicezwecke. So kann das Fassadenelement beispielsweise für Servicezwecke nach vorne in eine Kippposition verschwenkt werden, in der der Raum hinter den Fassadenelementen für Monteure von aussen zugänglich ist. Dies kann genutzt werden, um hinter den Fassadenelementen vorhandene Installationen (elektrische Leitungen, Wechselrichter etc.) zu warten oder reparieren.

Vorteilhaft ist der gleiche Anker sowohl sowohl in Verbindung mit dem ersten Befestigungsprofil als auch in Verbindung mit dem zweiten Befestigungsprofil verwendbar. Dadurch müssen weniger Teile auf Lager gehalten werden.

Vorzugsweise ist der Anker an den Befestigungsprofile an zwei einander gegenüberliegenden Seite formschlüssig gehalten. Dies sorgt für eine gute Halterung des Ankers.

Vorteilhaft sind die am Befestigungsprofil angeordneten Anker mit ihrem Fuss jeweils nach aussen orientiert. Durch die entgegengesetzte Anordnung der Anker, die am unteren Rand des Fassadenelements angeordnet sind, und denjenigen, die am oberen Rand des Fassadenelements angeordnet sind, befinden sich die Ankerhaken jeweils im Bereich des Randes der Fassadenelemente, was ein Vorteil bei der Montage und für die Zugänglichkeit ist. Entsprechend sind die Anker an einem vertikal angeordneten Befestigungsprofil jeweils in entgegengesetzte Richtungen orientiert. An den horizontal angeordneten Befestigungsprofilen sind die Anker jedoch jeweils in die gleiche Richtung orientiert.

Vorteilhaft hat das Befestigungsprofil eine Klemmnut, in der der eine Teil eines Befestigungsmittel vorzugsweise verdrehsicher aufgenommen ist. Damit ist die Klemmnut selbst das Gegenlager für das Befestigungsmittel, wobei der eine Teil des Befestigungsmittels eine Schraube oder ein Klemmschuh sein kann.

Gemäss einer vorteilhaften Ausführungsform besitzen die Montageprofile jeweils zwei Kanäle, in welche zwecks Verbindung zweier benachbarter Montageprofile ein Stossprofil einschiebbar ist. Damit kann das Problem der thermischen Ausdehnung der Profile in den Griff bekommen werden.

Vorzugsweise sind die Stossprofile in Führungsnuten formschlüssig gehalten. Damit können sich die über die Stossprofile miteinander verbundenen Montageprofile sich nicht gegeneinander verwinden. Auch können die Stösse der Montageprofile an beliebiger Stelle sein.

Gegenstand der vorliegenden Erfindung ist auch ein Verfahren zur Herstellung einer aus einzelnen Fassadenelementen gebildeten Gebäudefassade, bei dem die Fassadenelemente an Montageprofilen, die wiederum an einer Unterkonstruktion einer Gebäudefasse angeordnet sind, befestigt werden. Dieses erfindungsgemässe Verfahren zeichnet sich dadurch aus, dass an der Rückseite der Fassadenelemente Befestigungsprofile mit Ankern befestigt werden, dass an der Gebäudewand in einem Abstand voneinander Montageprofile im Wesentlichen horizontal befestigt werden, dass die Fassadenelemente mittels der Anker an einem unteren Montageprofil eingehängt werden und eine erste Formschlussverbindung hergestellt wird, und dass das Fassadenelement dann an einem oberen Montageprofil mittels eines in Montageprofillängsrichtung an der Trägerschiene angeordneten Schiebeteils eine zweite Formschlussverbindung realisiert wird. Dieses Herstellverfahren ist besonders vorteilhaft, weil die Fassadenelemente auch von einer Person mühelos montiert werden können.

Vorteilhaft wird das Fassadenelement bei der Montage nach dem Einhängen an einem unteren Montageprofil gegen das obere Montageprofil verschwenkt, dann das Schiebeteil mit dem Anker in Eingriff gebracht und am Montageprofil festgestellt.

Gegenstand der Erfindung ist auch eine Fassadenverkleidung mit dem Befestigungssystem

Ausführungsbeispiele der Erfindung werden nun unter Bezugnahme auf die nachfolgenden Figuren näher im Detail beschrieben. Es zeigt:
- Figur 1:: Auf der linken Seite eine an Montageprofilen angeordnete, vorgehängte Fassadenwand mit zwei übereinander angeordneten Fassadenelementen in Gestalt von Glasplatten und auf der rechten Seite im vergrösserten Massstab die Verbindung zwischen den Montageprofilien und den Fassadenelementen;
- Figur 2:: In perspektivischer Ansicht ein unteres Montageprofil;
- Figur 3:: In perspektivischer Ansicht ein oberes Montageprofil;
- Figur 4:: In perspektivischer Ansicht ein mittleres Montageprofil, auch Fugenprofil bezeichnet, zur Fixierung zweier übereinander angeordneter Fassadenelemente;
- Figur 5:: In perspektivischer Ansicht ein Schiebeteil zur Verbindung des oberen Endes eines Fassadenelements mit dem oberen Montageprofil oder Fugenprofil;
- Figur 6:: Eine erste Ausführungsform eines Ankers (starr), ebenfalls in perspektivischer Ansicht;
- Figur 7:: Der Anker von Fig. 6, jedoch in justierbarer Ausführung, mit einer zusätzlichen Bohrung für die Aufnahme einer Justierschraube;
- Figur 8:: In perspektivischer Ansicht ein erstes Ausführungsbeispiel eines Befestigungsprofils zur Montage auf der Rückseite eines Fassadenelements;
- Figur 9:: In perspektivischer Ansicht ein Auflagewinkel zur Sicherung eines Fassadenelements;
- Figur 10:: In perspektivischer Ansicht ein Stossprofil zur Verbindung zweier erster oder zweiter Montageprofile, das zur Verbindung aller in der vorliegenden Patentanmeldung gezeigten Montageprofile geeignet ist;
- Figur 11:: In perspektivischer Ansicht eine Kabelklammer;
- Figur 12:: Ein Dachrandabschluss einer Fassadenkonstruktion im Vertikalschnitt;
- Figuren 13: In perspektivischer Ansicht die wesentlichen Montageschritte bei der
- und 14:: Herstellung einer Fassadenkonstruktion;
- Figur 15:: In perspektivischer Ansicht eine zweite Ausführungsform eines Befestigungsprofils zur Befestigung und vertikalen Anordnung an der Rückseite des Fassadenelements;
- Figur 16:: Eine zweite Ausführungsform eines Ankers, jedoch in justierbarer Ausführung, für das Befestigungsprofil von Fig. 15;
- Figur 17:: In Explosionsdarstellung die Montageschritte für die Befestigung des Ankers von Fig. 16 am Befestigungsprofil von Fig. 15;
- Figur 18:: Eine zweite Ausführungsform eines Auflagewinkels zur Montage am Befestigungsprofil von Fig. 15;
- Figur 19:: In perspektivischer Ansicht eine dritte Ausführungsform eines Befestigungsprofils zur Befestigung und horizontalen Anordnung an der Rückseite eines Fassadenelements;
- Figur 20:: In Explosionsdarstellung die Montageschritte für die Befestigung des Ankers von Fig. 16 am Befestigungsprofil von Fig. 19;
- Figur 21:: Eine dritte Ausführungsform eines justierbaren Ankers ;
- Figur 22:: Ein Montageprofil einer vierten Ausführungsform zur Verwendung mit dem Anker gemäss Fig. 21 als Abschluss bei auskragenden Gebäudeteilen;
- Fig. 23:: Die obere Verbindung eines Fassadenelements mit einer Fassade gemäss dem zweiten Ausführungsbeispiel eines Befestigungssystems mit einem geänderten oberen Montageprofil und einem Anker;
- Figur 24:: Das obere Montageprofil von Fig. 23;
- Figur 25:: Die untere Verbindung eines Fassadenelements mit einer Fassade gemäss dem zweiten Ausführungsbeispiel eines Befestigungssystems mit einem geänderten unteren Montageprofil und einem Anker;
- Figur 26:: Das untere Montageprofil von Fig. 25;
- Figur 27:: Die Verbindung zweier übereinander angeordneter Fassadenelemente mittels eines Fugenprofils, das im Wesentlichen eine Kombination eines oberen Montageprofils gemäss Fig. 24 und eines untereen Montageprofils gemäss Fig. 26 entspricht;
- Figur 28:: Das Fugenprofil von Fig. 25;
- Figur 29:: Darstellung wie in Fig. 26, jedoch mit gekipptem oberen Fassadenelement;
- 30: Eine Seiten-, Front- und Draufsicht eines justierbaren Ankers des zweiten Ausführungsbeispiels;
- Figur 31:: Eine Seiten-, Front- und Draufsicht eines nicht-justierbaren Ankers des zweiten Ausführungsbeispiels;
- Figur 32:: Eine Seiten-, Front- und Draufsicht eines Schiebeteils einer zweiten Art für das zweite Ausführungsbeispiel;
- Figur 33:: Eine Draufsicht auf ein Schiebeteil und einen Anker;
- Figur 34:: Eine Befestigungsschiene für das zweite Ausführungsbeispiel des Befestigungssystems;
- Figur 35:: Ein Ausführungsbeispiel eines Verstärkungsprofils,
- Figur 36:: Einen Schnitt durch die Befestigungsschiene/Anker/Verstärkungsprofil und Auflagewinkel; und
- Figur 37:: Ein Ausführungsbeispiel einer Migrationssicherungfür die zweite Variante in Gestalt einer Blattfeder.

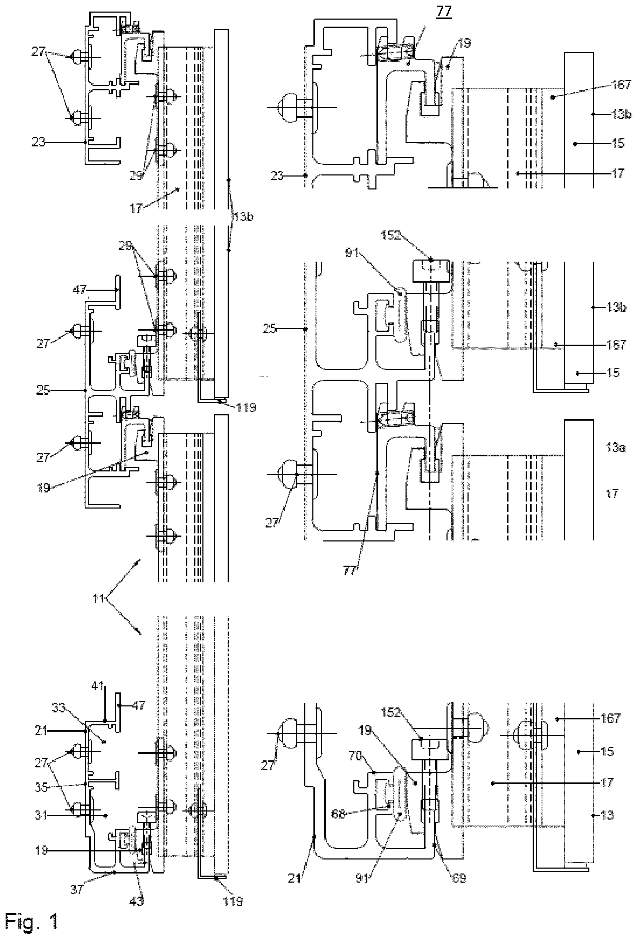

Die Figuren 1 bis 11 zeigen den Aufbau und die einzelnen Komponenten einer vorgehängten Fassadenkonstruktion 11, beispielhaft mit zwei übereinander angeordneten Fassadenelementen 13a und 13b (Fig. 1). Die Fassadenelemente, nachfolgend gesamthaft auch mit der Bezugsziffer 13 bezeichnet, sind gemäss dem gezeigten Ausführungsbeispiel Glasplatten 15, könnten jedoch auch jede andere Art von Platten sein, die mittels eines Befestigungsprofils 17 und daran angeordneten Ankern 19 an horizontalen Montageprofilen 21, 23, 25 lösbar befestigt sind. Dabei können die Glasplatten 15 selbstredend auch auf Glasplatten aufgebrachte Photovoltaikmodule (nicht gezeigt) umfassen. Dies ist jedoch im Rahmen der vorliegenden Erfindung ein Nebenaspekt, da der Erfindungsgegenstand ein System zur Befestigung von Fassadenelementen, insbesondere von Photovoltaikmodulen und Glasplatten, zum Gegenstand hat.

Wie aus der Figur 1 ersichtlich ist, sind die Montageprofile 21, 23, 25 mittels Nieten oder Schrauben 27 an eine nicht näher dargestellte Unterkonstruktion einer Gebäudefassade befestigt. Die Anker 19 wiederum sind mit Schrauben oder Nieten 29 an das Befestigungsprofil 17 befestigt. Im Übrigen erfolgt die Montage der Fassadenelemente mittels Formschlussverbindungen der Anker 19 mit den Montageprofilen 21, 23, 25, wie dies weiter unten noch erklärt wird.

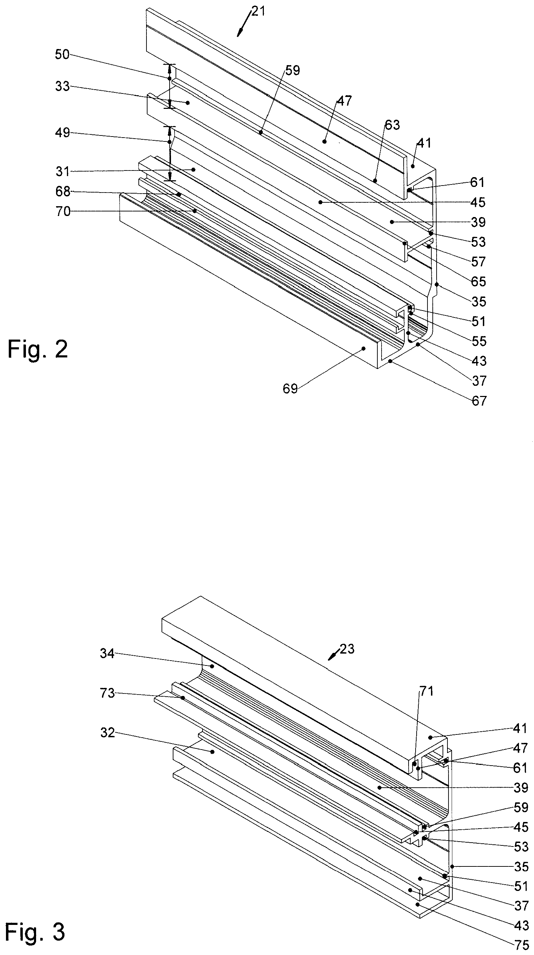

Das untere Montageprofil 21 hat zwei Kanäle 31,33, die durch eine lange Basiswand 35 und von dieser in einem rechten Winkel abstehende und zueinander parallel verlaufende Stege 37,39,41 gebildet sind (Fig. 2). An den Stegen 37,39,41 sind jeweils auf in einem rechten Winkel abstehende Rippen 43,45,47 angeformt, die parallel zur Basiswand 35 verlaufen. Zwischen den Rippen 43,45,47 sind entsprechend in Längsrichtung des Montageprofils 21 verlaufende und durch Pfeile angezeigte Spalte 49,50 vorhanden. Damit besteht die Möglichkeit, die Basiswand 35 an eine Unterkonstruktion einer Gebäudefassade zu befestigen, indem die Schrauben/Nieten 27 (Fig. 1) im Bereich der Spalte 47,49 durch die Basiswand 35 in die Unterkonstruktion eingeschraubt werden.

Im Kanal 31 sind Führungsnuten 51,53 vorgesehen, die durch Vorsprünge 55,57 in Verbindung mit der Rippe 43 resp. dem Steg 39 gebildet sind. Desgleichen sind im Kanal 33 zwei Führungsnuten 59,61 vorgesehen, die durch Vorsprünge 63,65 in Verbindung mit dem Steg 39 resp. der Rippe 47 gebildet sind. Die Führungsnutenpaare 51,53 und 59,61 dienen der formschlüssigen Aufnahme eines weiter unten beschriebenen Stossprofils, das der Verbindung zweier durch einen Dilatationsspalt getrennten Montageprofile 21 dient. Die Führungsnutenpaare 51,53 und 59,61 sind so ausgebildet, dass diese jeweils das gleiche Stossprofil aufnehmen können.

An das Montageprofil 21 angeformt ist eine L-förmige Nase 67, die als Verlängerung des Stegs 37 ausgebildet ist und die jeweils in der gleichen Ebene liegenden Rippen 43,45,47 überragt. Der Schenkel 69 der Nase 67 erstreckt sich dabei parallel zur Basiswand 35 und in Richtung zur Mitte des Montageprofils 21. In der fertigen Fassadenkonstruktion trägt der Schenkel 69 das ganze Gewicht eines Fassadenelementes 13, das sich auf dem Schenkel 69 abstützt.

An der von der Basiswand 35 abgewandten Seite der Rippe 43 ist eine Führungsnut 68 mit einem Hinterschnitt 70 vorgesehen. Diese dient der Aufnahme eines Polsters 92, z.B. ein Gummiprofil, an welchem das Fassadenelement im montierten Zustand anliegt (s. Fig. 1). Das Polster 92 verhindert eine mögliche Geräuschentwicklung bei Wind und ein seitliches Verrutschen des anliegenden Fassadenelements.

Nachfolgend werden nun noch das obere Montageprofil 23 und das mittlere Montageprofil 25 beschrieben. Da diese Montageprofile 23,25 teilweise die gleiche Funktionalitäten aufweisen wie das Montageprofil 21 werden für funktionsgleiche Teile die gleichen Bezugsziffern verwendet. Das Montageprofil 25 kann mit den Montageprofilen 21,23 kombiniert werden (z.B. Fenstersturz, Fensterbank).

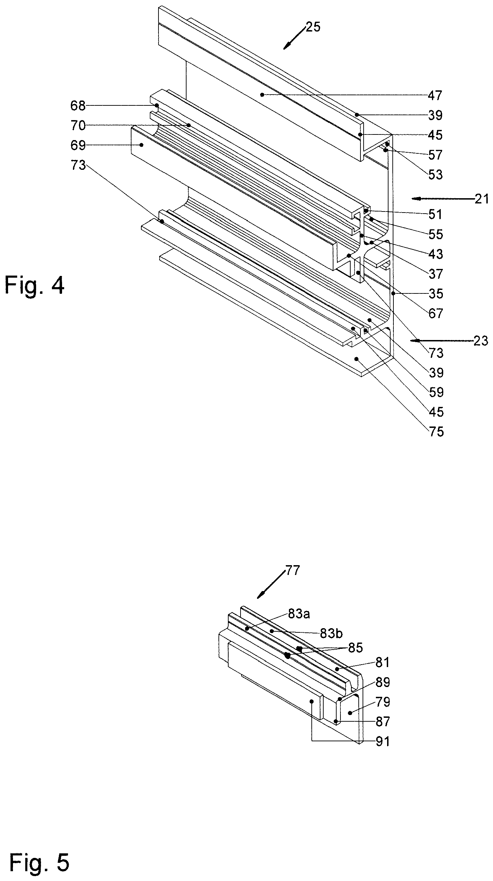

Wie schon das Montageprofil 21 haben auch die Montageprofile 23,25 jeweils zwei Kanäle 32,34 mit Führungsnuten 51,53,59,61, die der Aufnahme von Stossprofilen dienen (s. Fig. 3 und 4). Mit den Stossprofilen können zwei in axialer Richtung voneinander beabstandete Montageprofile 21 miteinander verbunden werden können.

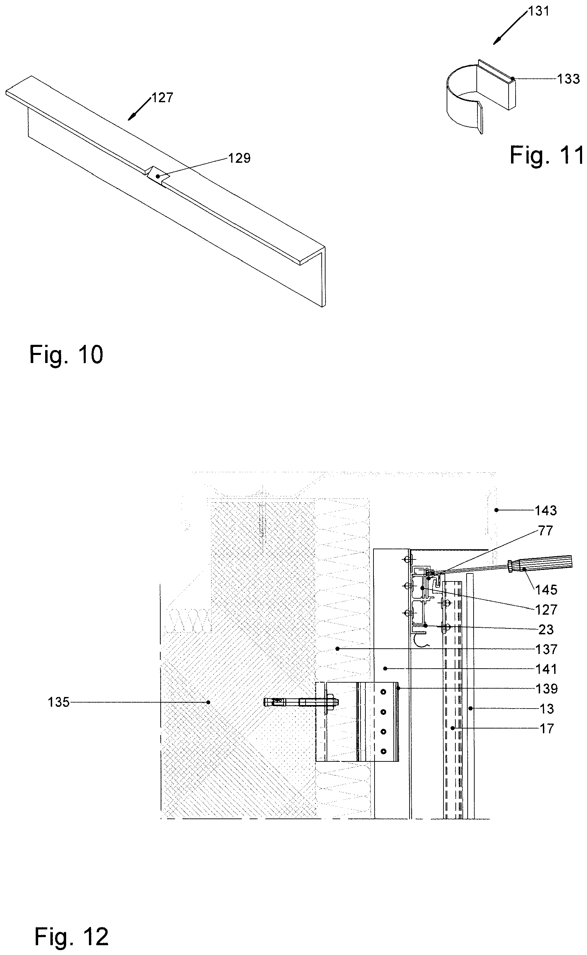

Das Montageprofil 23 (Fig. 3) unterscheidet sich vom Montageprofil 21 im Wesentlichen dadurch, dass anstelle eines Schenkels 69 für die Abstützung eines unteren Ankers eine durch zwei gegeneinander orientierte Führungsnuten 71, 73 gebildete Führungseinrichtung vorgesehen ist. Diese dient der Aufnahme eines Schiebeteils, wie es weiter unten noch im Detail beschrieben wird (Fig. 5). Ausserdem besitzt das Montageprofil 23 noch einen weiteren Steg 75 im Abstand und parallel zum Steg 37. An diesen kann beispielsweise eine Kabelklammer angesteckt werden (siehe weiter unten Beschreibung zur Fig. 11).

Das mittlere Montageprofil 25 (Fig. 4) ist eine Kombination der beiden oben beschriebenen Montageprofile 21 und 23, wobei das obere Montageprofil 23 im unteren Abschnitt und das untere Montageprofil 21 im oberen Abschnitt des Montageprofils 25 reproduziert sind. Entsprechend wurden für die funktionsgleichen Elemente die gleichen Bezugsziffern verwendet wie bei der Beschreibung der Montageprofile 21,23. Entsprechend kann bezüglich der Funktionalitäten und technischen Merkmale auf die obige Beschreibung der Montageprofile 21,23 verwiesen werden.

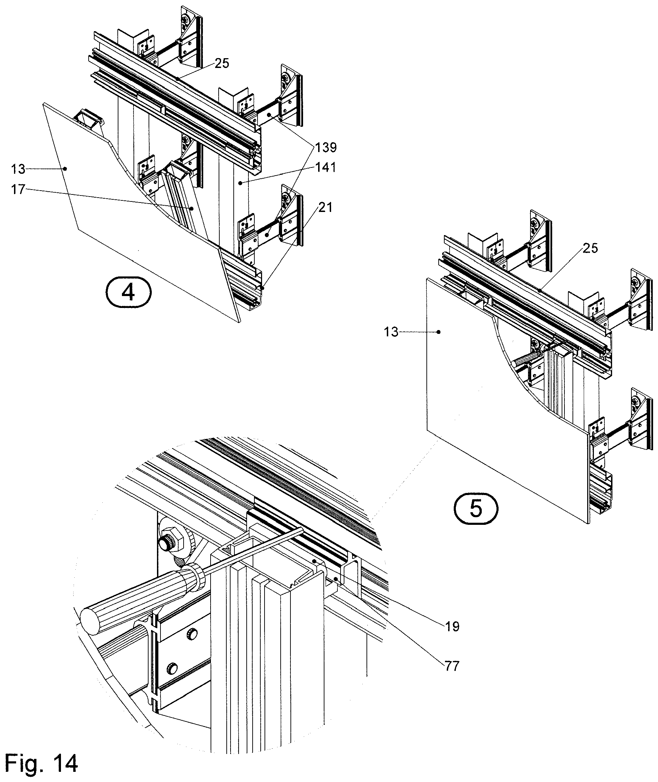

Das in Fig. 5 gezeigte Schiebeteil 77 umfasst eine im Wesentlichen rechteckförmige Grundplatte 79, deren Breite resp. Höhe auf den Abstand der Führungsnuten 71,73 (Fig. 3) abgestimmt ist. Das Schiebeteil 77 besitzt einen randseitigen und nach oben offenen, U-förmigen Führungskanal 81, der mit dem Anker 77 unter Bildung eines Formschlusses zusammenwirken kann. In den Wänden 83a,83b des Führungskanals 81 ist eine Bohrung 85 vorgesehen, die der Aufnahme einer Schraube (s. Fig. 14, Abb. 5) dient. Mit Hilfe dieser Schraube kann das Schiebeteil 77 an einer einmal entlang des Montageprofils eingenommenen Position fixiert werden, sodass ein seitliches Verrutschen verunmöglicht ist. Im Weiteren besitzt das Schiebeteil 77 noch eine zur Grundplatte 79 beabstandete und parallele Anschlagsplatte 87, die über einen Steg 89 mit der Grundplatte 79 verbunden ist. Auf der zur Grundplatte 79 abgewandten Seite der Anschlagsplatte 87 ist ein elastisches Polster 91, z.B. ein geschäumter Kunststoff, angeordnet. An diesem Polster 91 liegt das Fassadenelement 13 im fertigmontierten Zustand an.

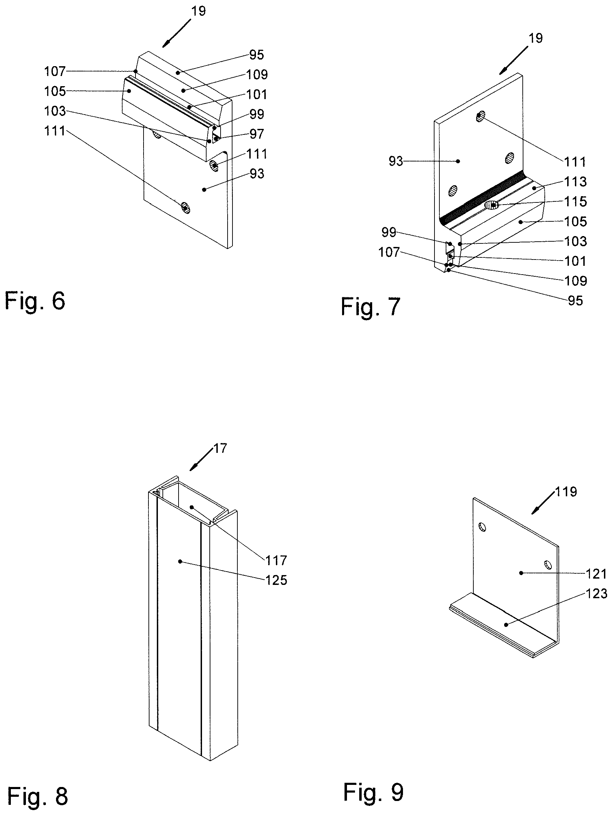

Die Figuren 6 und 7 zeigen zwei Ausführungsformen des Ankers 19 näher im Detail. Der Anker 19 umfasst eine rechteckförmige Basisplatte 93, bei der auf der einen Seite und im Abstand zur Stirnseite 95 ein Kanal 97 mit einer Kanalöffnung 101 vorgesehen ist. Die Kanalöffnung 101 ist durch Hinterschneidungen 99 verengt, wobei die lichte Weite der Kanalöffnung 101 um ein bestimmtes Mass, vorzugsweise um 0,5 bis 4 mm, vorzugsweise 0,5 bis 2 mm, grösser als die Stärke des Schenkels 69 des unteren Montageprofils 21 (Fig. 2) ist. Die Breite des Kanals 97 entspricht vorzugsweise der zwei- bis vierfachen Stärke des Schenkels 69 des Montageprofils 21. Damit hat der in den Kanal 97 heinragende Schenkel 69 ausreichend Platz, um einen grösseren Winkelbereich zwischen 0 und ungefähr 25 bis 45 Grad zu überstreichen. Dadurch kann ein Fassadenelement zwischen einer schrägen Kippposition und einer senkrechten Einbauposition verschwenkt werden kann, wenn das Ende des Schenkels 69 im Kanal 97 aufgenommen ist. Das Fassadenelement bleibt dadurch mit dem Montageprofil gekoppelt.

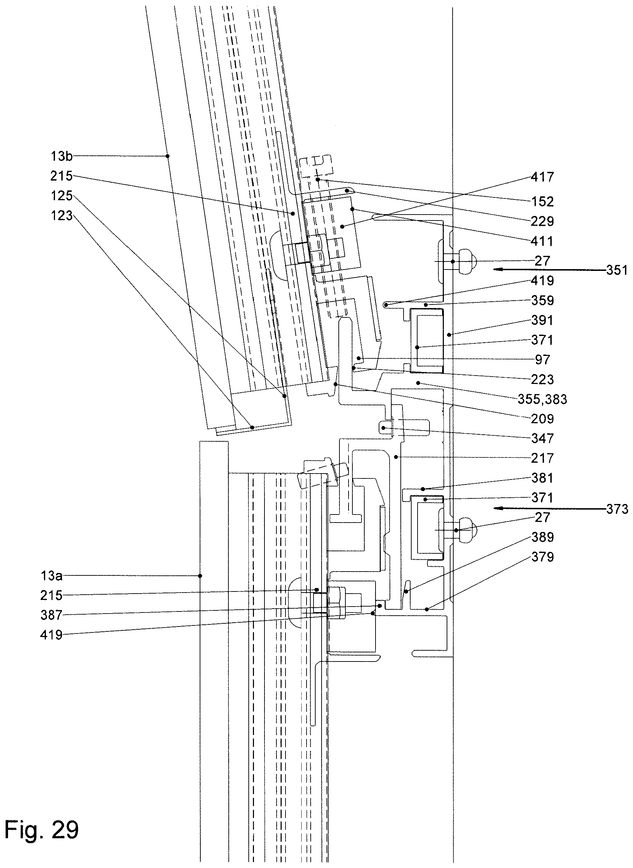

Um ein einmal am Schenkel 69 des unteren Montageprofils 21 eingehängtes Fassadenelement in einer stabilen Kippposition halten zu können, ist am Anker 19 eine Anschlagfläche in Gestalt einer Abschrägung 109 vorgesehen. Die Abschrägung 109 ist kanalseitig an einem die Kanalöffnung 101 überragenden Rand 107 der Basisplatte 93 ausgebildet, um eine grössere Auflagefläche zu bieten. In der Kippposition des Fassadenelements liegt die Anschlagsfläche 109 an der Aussenseite des Schenkels 69 an (siehe unten Fig. 29), und der Schenkel 69 ragt in einem Winkel in den Kanal 97 hinein.

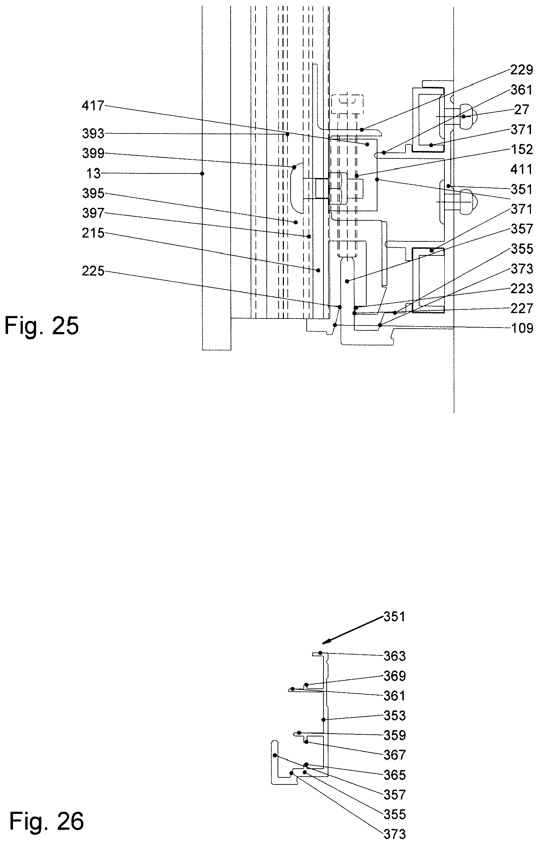

An der äusseren Kanalwand 103 ist eine Abschrägung 105 vorgesehen, welche die äussere Kanalwand 103 endständig schmaler macht, dies aus Gründen der Materialersparnis und/oder um passgenau mit einer komplementären Vertiefung im unteren Montageprofil zusammenwirken zu können (vgl. unten Beschreibung zur Fig. 25).

Zur Montage des Ankers 19 am Befestigungsprofil 17 (Fig. 1 und 8) sind drei Bohrungen 111 vorgesehen, die der Aufnahme der Schrauben 29 oder Nieten (Fig. 1) dienen.

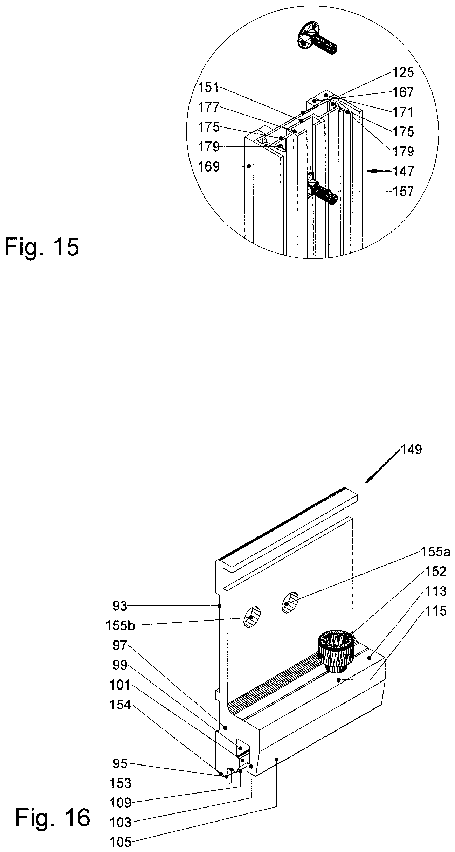

Der Anker 19 gemäss Fig. 7 hat im Kanalgrund 113 eine weitere Bohrung 115. Diese dient der Aufnahme einer Justierschraube (in Fig. 7 nicht gezeigt; siehe jedoch Fig. 16), mit Hilfe derer das Fassadenelement bei der Montage horizontal ausgerichtet werden kann. Dabei sieht das Konzept vor, dass das Gewicht der Fassadenelemente über die Justierschraube 152 auf den Schenkel 69 der Nase 67 (Fig. 2) abgetragen wird. Die Tiefe des Kanals 97 entspricht vorteilhaft der zwei bis zehnfachen und vorzugsweise der drei- bis siebenfachen Stärke des Schenkels 69. In der Praxis beträgt die Tiefe des Kanals 97 zweckmässigerweise zwischen 1cm und 6cm.

Fig. 8 zeigt das Befestigungsprofil 17 näher im Detail. Dieses ist als stranggepresstes Aluminium-Rohrprofil mit einem Hohlraum 117 ausgebildet, der auch das Einführen eines Niets zur Befestigung des Ankers 19 ermöglicht. Das Befestigungsprofil 17 wird vorzugsweise auf die Rückseite eines zu befestigenden Fassadenelementes geklebt oder anderweitig befestigt.

In Fig. 9 ist ein Auflagewinkel 119 gezeigt, der bei Bedarf oder entsprechenden gesetzlichen Vorschriften am Befestigungsprofil 17 montiert werden kann, um im Brandfall ein Herunterfallen von Fassadenelementen zu verhindern. Dabei wird der Schenkel 121 des Auflagewinkels 119 in den Hohlraum 117 des Befestigungsprofils 17 eingeführt und so positioniert, dass der zweite Schenkel 123 an der Stirnseite des Fassadenelements anliegt, und dann mit dem Boden 125 (Fig. 8) verschraubt oder vernietet. Denkbar ist jedoch auch, den Auflagewinkel zuerst am Befestigungsprofil 17 zu befestigen und erst dann das Befestigungsprofil 17 am Fassadenelement anzukleben.

Fig. 10 zeigt ein als Winkelprofil ausgebildetes Stossprofil 127, das formschlüssig und mit geringem Spiel in die durch die Führungsnutenpaare 51,53 und 59,61 der Kanäle 31, 33 gebildete Führungen passt. Durch die formschlüssige Aufnahme des Stossprofils 127 in den Kanälen 31,33 der Montageprofile 21,23,25 lassen sich die Montageprofile verwindungsfrei verlängern und kombinieren. Weil Gebäudefassaden sehr heiss werden können, sollten die Montageprofile wegen der damit verbundenen Längenänderungen jeweils nicht länger als ca. 3m sein. Das Stossprofil 127 hat ungefähr in der Mitte eine nach unten gebogene Nase 129, die ein Verrutschen des Stossprofils verhindert.

Die in Fig. 11 dargestellte Kabelklammer 131 aus einem Federstahl oder Kunststoff lässt sich beispielsweise an die Rippe 47 der Montageprofile 21,25 oder den freien Steg 75 der Montageprofile 23,25 anstecken, indem die Spange 133 auf die Rippe 47 oder den Steg 75 geklemmt wird.

Fig. 12 zeigt den Dachrand eines Flachdaches und den Aufbau der Fassadenkonstruktion mit dem erfindungsgemässen Befestigungssystem. Dabei bezeichnet die Bezugsziffer 135 eine Gebäudewand und die Ziffer 137 eine daran angebrachte Dämmschicht. An die Gebäudewand geschraubt ist ein Distanzhalter 139, an welchem eine vertikale Montageschiene 141 angeordnet ist. An dieser ist wiederum das Montageprofil 23 horizontal angeordnet. Es ist erkennbar, dass das Schiebeteil 77 mit einem Schraubendreher 145 fixiert werden kann, auch wenn der Dachabschluss 143 über die Fassade hinauskragt.

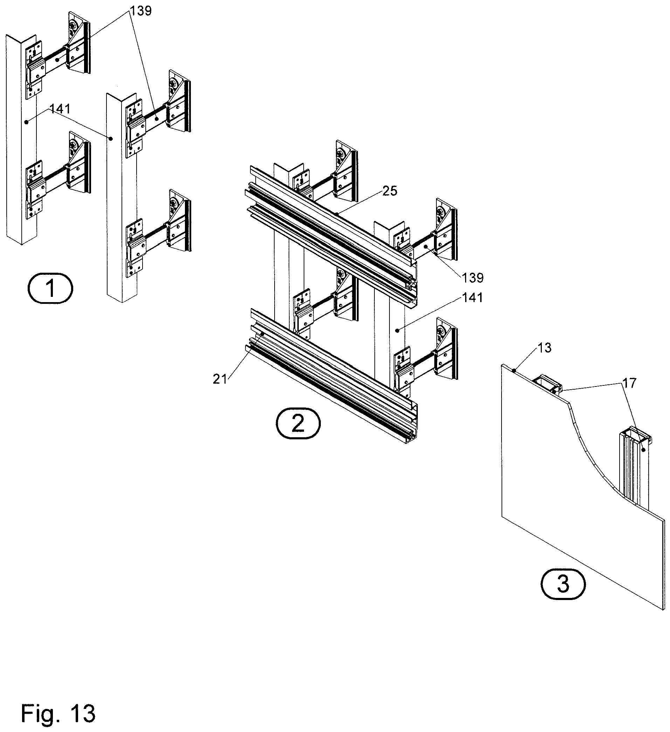

In den Figuren 13 und 14 sind die einzelnen Arbeitsschritte der Herstellung einer Gebäudefassade wiedergegeben. Zuerst werden die Distanzhalter 139 an die Gebäudewand (nicht gezeigt) geschraubt und dann die Dämmung (nicht gezeigt) angebracht. Danach werden vertikale Montageschienen 141 an die Distanzhalter 139 montiert. An die Montageschienen 141 werden danach die Montageprofprofile 21,25 in vorbestimmten Abständen montiert (Schritt 2). Die Fassadenelemente 13 mit den Befestigungsprofilen 17 werden werkseitig vorbereitet und auf der Baustelle am unteren Montageprofil 21 eingehängt (Schritt 4 in Fig. 14). Danach wird das Fassadenelement an das Montageprofil 25 geschwenkt und der Formschluss zwischen dem Schiebeteil 77 und dem Anker 19 hergestellt, indem ersteres entlang des Montageprofils 25 verschoben und in Eingriff mit dem Anker 19 gebracht wird. Danach wird das Schiebeteil 77 am Montageprofil 23 resp. 25 noch fixiert, indem eine Feststellschraube in die Bohrung 85 eingeschraubt wird.

Die Figuren 15 bis 17 zeigen eine alternative Ausführungsform eines Befestigungsprofils 147 und eines zu diesem passenden Ankers 149. Wesentlicher Unterschied zur weiter oben beschriebenen ersten Ausführungsform (siehe Fig. 8) ist, dass das Befestigungsprofil 147 eine in Längsrichtung verlaufende Klemmnut 151 aufweist, welche der Befestigung des Ankers 149 mittels einer Schraube 157 dient, deren Schraubenkopf in der Klemmnut gehatlen ist. Diese Ausführungsform hat den Vorteil, dass der Anker 149 nicht zwingend im Werk vormontiert werden muss, sondern auf der Baustelle montiert oder noch versetzt werden kann.

Der Anker 149 gemäss Fig. 16 die gleichen und noch weitere Funktionalitäten wie der Anker 17 aufweist, wurden für die Beschreibung der gleichwirkenden Merkmale jeweils die gleichen Bezugsziffern verwendet wie beim Anker 19. Wie der Anker 19 hat auch der Anker 147 eine Basisplatte 93, einen an der Vorderseite der Basisplatte 93 angeformten Kanal 97, aussen an der Kanalwand 103 eine Abschrägung 105 und im Abstand von der Stirnseite der Basisplatte 93 eine Abschrägung 109. In Verbindung mit der Hinterschneidung 99 des Kanals 97 kann ein mit dem Befestigungsprofil 147 und dem Anker 149 bestücktes Fassadenelement 13 in einem Winkel zur Ebene der Fassadenwand an einem unteren Montageprofil 21 eingehängt werden. Ausserdem erlauben die gleichen vorerwähnten technischen Merkmale ein Verschwenken des Fassadenelements, wobei die Abschrägung 109 und gegebenenfalls die Abschrägung 105 in der einen Extremposition als Anschlagfläche(n) dienen.

Der Anker 149 ist mit einer Justierschraube 152 ausgerüstet, die in eine Bohrung 115 im Kanalgrund 113 einschraubbar ist.

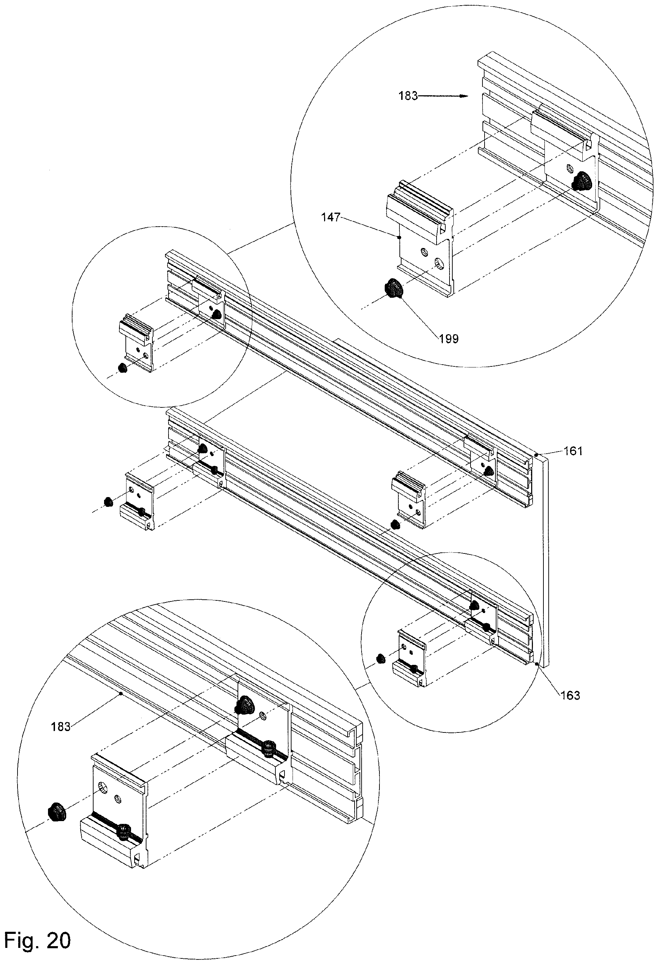

Im Unterschied zum Anker 17 hat die Basisplatte 93 des Ankers 147 nach der Abschrägung 109 noch einen Absatz 153 und einen daran anschliessenden, verjüngten Führungsabschnitt 154. Dieser kann mit einer Führungsnut des weiter unten beschriebenen horizontalen Befestigungsprofils zusammenwirken (siehe Beschreibung zu Fig. 20 unten).

In der Basisplatte sind zwei Rundlöcher 155a und 155b vorgesehen, die der Aufnahme des Schaftes einer Schlossschraube 157 dienen (Fig. 15). Je nach zum Einsatz kommenendem Befestigungsprofil muss die Schlossschraube 157 entweder in das mittige Rundloch 155a (vertikales Befestigungsprofil 147, s. Fig. 15) oder in das Rundloch 155b (horizontale Befestigungsprofil, s. Fig. 20 unten) eingesetzt werden.

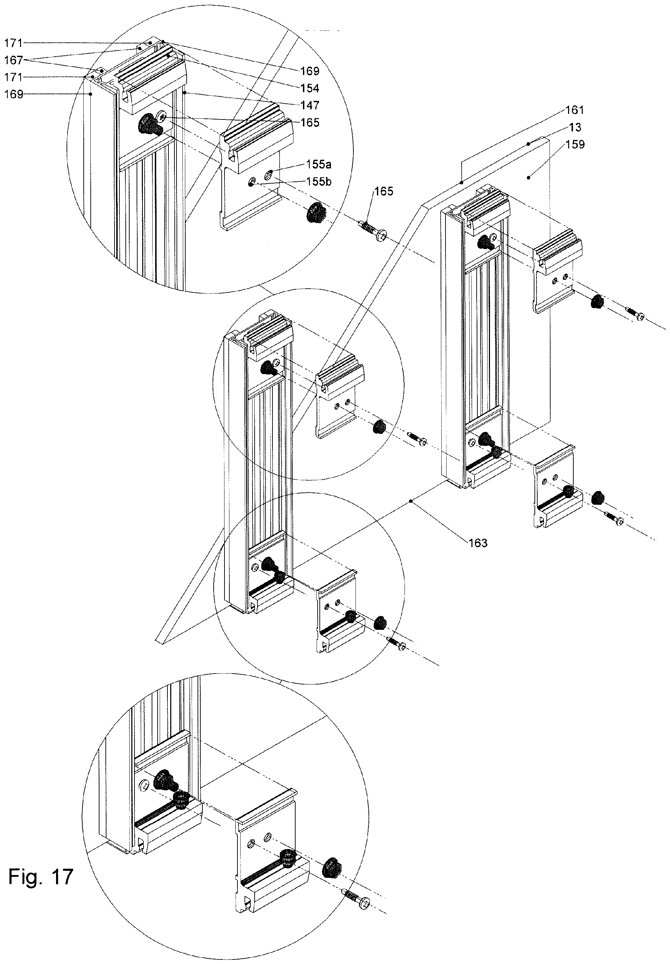

In der Figur 17 ist ein fertig mit Befestigungsprofil 147 und Anker 149 ausgerüstetes Fassadenelement und die Montage des Ankers 149 an der Rückseite 159 eines Fassadenelements 13 in einer Explosionsdarstellung gezeigt. Es ist erkennbar, dass das Befestigungsprofil 147 um eine bestimmte Distanz von der oberen und unteren Stirnseite 161, 163 des Fassadenelements 13 zurückversetzt ist. Dabei ist der Anker 147 so am Befestigungsprofil 147 montiert, dass der Führungsabschnitt 154 das Befestigungsprofil 147 stirnseitig überragt. Um den Anker 149 zusätzlich zu sichern, ist dieser mit einer vorzugsweise selbstbohrenden Schraube 165 gesichert, die durch das freie Rundloch 155a eingedreht wird.

Die Befestigung der Befestigungsprofile 147 erfolgt vorteilhaft durch Kleben. Dabei werden die Befestigungsprofile 147 zuerst zwei selbstklebende Klebeprofile 167 im Abstand zu den Seitenkante 169 an die Basiswand 125 des Befestigungsprofils und letzteres dann auf die Rückseite des Fassadenelements geklebt (Fig. 15). Danach werden die verbleibenden Hohlräume zwischen den Klebeprofilen 167 und den Seitenkanten 169 mit einem geeigneten Hochleistungskleber eine Klebefuge 171 erstellt.

In Verbindung mit dem Befestigungsprofil 147 kann ein Auflagewinkel 173 eingesetzt sein.. DerAuflagewinkel hat einen ersten Schenkel 123, der im montierten Zustand am Fassadenelement anliegt, und zwei zweite Schenkel 125, die in den Zwischenraum zwischen der Seitenwand 177 und der Zwischenwand 179 des Befestigungsprofils147 passen. Die Befestigung der zweiten Schenkel 125 erfolgt vorzugsweise mittels Nieten 181

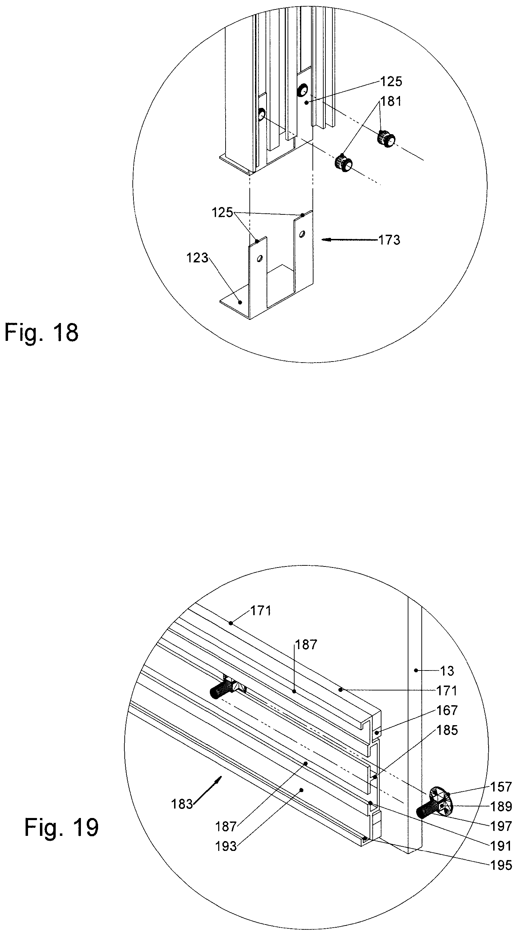

Mit der Bezugsziffer 183 ist in den Figuren 19 und 20 eine dritte Ausführungsform eines Befestigungsprofils dargestellt, das zur horizontalen Montage an der Rückseite eines rechteckigen Fassadenelements geringer Höhe und grosser Breite geeignet ist. Unter geringer Höhe ist dabei eine Höhe von weniger als ungefähr 1m oder vorzugweise weniger als 80 cm gemeint, wobei die Breite gleich gross oder grösser oder ein Mehrfaches, insbesondere mehr als Doppelte oder Dreifache der Höhe ist. Zur Befestigung solcher Fassadenelemente müssten zwei oder mehr senkrechte Befestigungsprofile verwendet werden, was ein erhöhter Herstellungsaufwand bedeuten würde. Bei einer horizontalen Anordnung reichen jedoch zwei Befestigungsprofile aus.

Das Befestigungsprofil 183 ist bezüglich eines Mittelstegs 185 spiegelbildsymmetrisch aufgebaut. Es hat verfügt über zwei Klemmnuten 187, in die Schlossschrauben 157 zur Befestigung eines Ankers 149 eingeschoben werden können. Eine Drehung der Schraube 157 ist dabei durch den in der Kemmnut 187 formschlüssig aufgenommenen Vierkant 189 der Schlossschraube 157 verhindert ist (analog beim Befestigungsprofil 147). Im oberen Drittel der Seitenwände 191 der Klemmnuten 187 ist ein Steg 193 mit einer zur Profilmitte orientierten U-förmigen Führungsnut 195 vorgesehen. Bei einer Montage des Ankers 149 wird dieser zuerst mit dem Führungsabschnitt 154 in die Nut 195 eingeführt und dann gegen die Vorderseite des Befestigungsprofils 183 verschwenkt. Dabei muss die Schlossschraube 157 zuvor in die richtige Position gebracht werden, damit der Schraubenschaft 197 in das seitlich angeordnete Rundloch 155b (Fig. 16) eingeführt und dann mit einer Schraubenmutter 199 festgeschraubt werden kann. Wie aus der Fig. 20 ersichtlich ist, dient der Hohlraum unterhalb des Stegs 193 der Anbringung des Klebeprofils 167 und der Klebefuge 171.

In der Fig. 20 ist die Montage des Ankers 147 in Explosionsdarstellung gezeigt. Das Befestigungsprofil 183 hat den Vorteil, dass es aufgrund der Symmetrie nie falsch verbaut werden kann. Bei der horizontalen Anordnung ist die lange Seitenwand des Befestigungsprofils 183 vorzugsweise ungefähr bündig mit der oberen oder unteren Seitenkante 161 resp. 163 des Fassadenelements, kann jedoch auch wenig, d.h. um max. 2 mm, gegenüber der oberen oder unteren Seitenkante 161 resp. 163 des Fassadenelements zurückversetzt sein.

Die zuletzt beschriebene alternative Ausführungsform des Befestigungssystems hat den Vorteil, dass ein und der derselbe Anker 149 sowohl beim vertikalen Befestigungsprofil 147 als auch beim horizontalen Befestigungsprofil 183 verwendet werden kann. Darüber hinaus, kann der Anker 149 auch erst auf der Baustelle gesetzt werden.

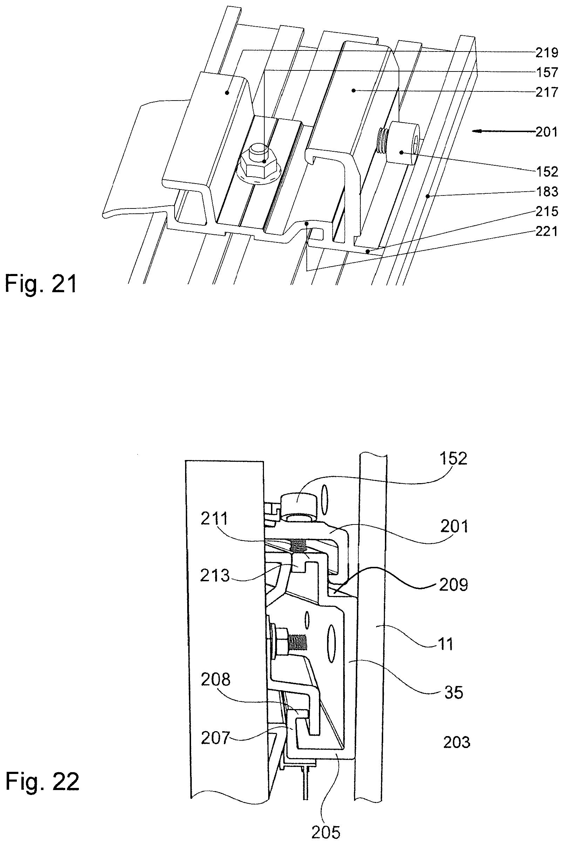

Fig. 21 zeigt schliesslich noch eine dritte Ausführungsform eines Ankers 201, der in Verbindung mit den Befestigungsprofilen 147,183 zum Einsatz kommen kann, und zwar dann, wenn bei einem stark auskragenden Bauteil, wie z.B. einem Dachrandabschluss oder einem Fensterbank, die Zugänglichkeit zum Schiebling 77 nicht mehr möglich ist. In diesem Fall wird das Fassadenelement an einem Montageprofil 203 einer vierten Ausführungsform (Fig. 22) lediglich eingehängt. Die vierte Ausführungsform eines Montageprofils 203 besitzt eine Basiswand 35, an der auf der einen Seite eine zur Basiswand 35 senkrecht stehende Seitenwand 205 mit einem zur Profilmitte orientierten Quersteg 207 mit einer Nase 208 angeformt ist, und auf der anderen Seite einen von der Basiswand abgesetzten Absatz 209 hat, der durch einen Ankerhaken hintergriffen werden kann. Am Absatz 209 ist ein Steg 211 mit einer Nase 213 angeformt.

Der Anker 201 besitzt ausgehend von einer Grundplatte 215 zwei auskragende Haken 217 und 219, wobei der obere, erste Haken 217 den Absatz 209 des Befestigungsprofils 203 hintergreift und der untere zweite Haken 219 an der Nase 208 anliegt. Eine im Schnitt gekrümmte Wölbung 221 verengt die Öffnung des ersten Hakens 217,sodass der Steg 211 mit der Nase 213 mit geringem Spiel aufgenommen ist. Selbstverständlich ist das Montageprofil 203 und der Anker 201 mit den übrigen Komponenten des Befestigungssystems kompatibel, d.h. in der Tiefe gleich viel aufträgt wie die anderen Kombinationen von Montageprofilen 147,183 und Anker19. Die Montage- und Befestigungsprofile des erfindungsgemässen Befestigungssystems sind vorzugsweise Strangpressprofile und vorteilhaft Aluminium-Strangpressprofile, ebenso wie die verschie denen Ausführungsformen der Anker, die von einem längeren Profil abgelängt werden können.

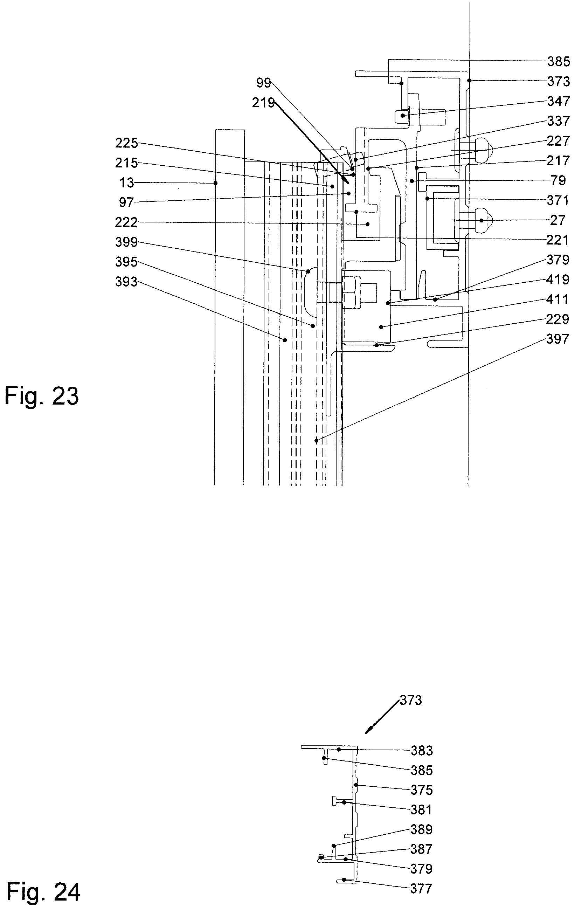

In den Fig. 23 bis 37 ist eine weitere Ausführungsform des erfindungsgemässen Befestigungssystems gezeigt. Die wesentlichen Unterschiede der nachfolgend beschriebenen Ausführungsform zum ersten Ausführungsbeispiel bestehen in den folgenden Punkten:
- der Anker und das Schiebeteil sind so ausgebildet sind, dass sich der Anker nicht unbeabsichtigt vom Schiebeteil lösen kann,
- das Schiebeteil lässt sich an jeder Stelle am Montageprofil einhängen, d.h. kann von vorne am Montageprofil eingehängt werden und muss im Unterschied zur oben beschriebenen ersten Ausführungsform nicht seitlich eingefädelt und in axialer Richtung an die richtige Stelle verschoben werden, und
- zwischen dem Anker und dem Schiebeteil ist eine zusätzliche Arretierung vorgesehen, die verhindert, dass sich Anker und Schiebeteil nach der Montage eines Fassadenelements relativ zueinander verschieben können.

In der nachfolgenden Beschreibung der Unterschiede zum ersten Ausführungsbeispiel des Befestigungssystems sind für gleichwirkende Teile jeweils die gleichen Bezugsziffern verwendet wie beim ersten Ausführungsbeispiel.

Zur Lösung des ersten Problems, nämlich zu verhindern, dass ein Fassadenelement unbeabsichtigt herunterfallen können, wenn z.B. der oder die unteren Anker nicht sachgemäss am unteren Montageprofil eingehängt sind, ist zwischen dem Anker 215 und dem Schiebeteil 217 eine Formschlussverbindung 219 vorgesehen derart, dass das Schiebeteil 217 sich nicht aus der Umklammerung des Ankers 215 lösen kann (Fig. 23, 27 und 29). Der Anker 215 und das Schiebeteil 217 sind im montierten Zustand miteinander verzahnt und können nur durch eine Relativverschiebung in Längsrichtung 222 des Kanals 97 sich aus dem gegenseitigen Eingrifflösen.

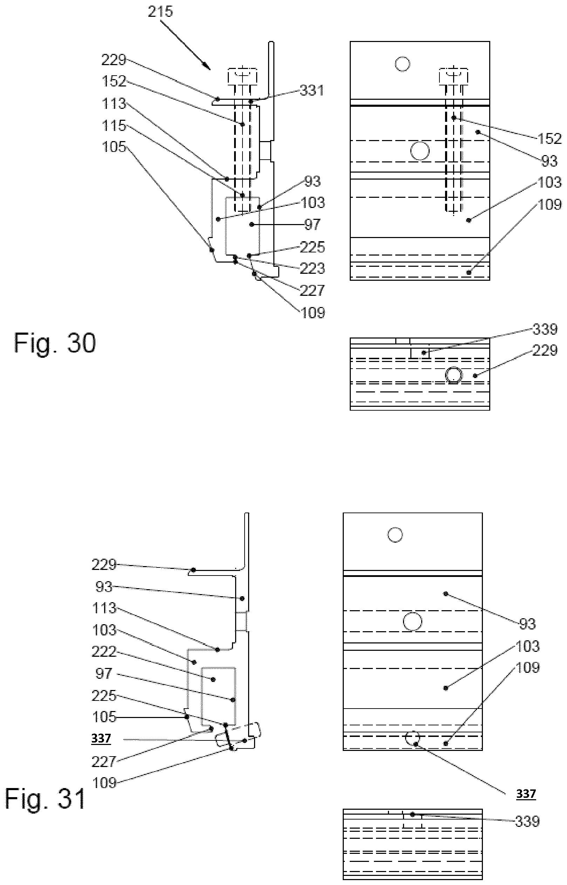

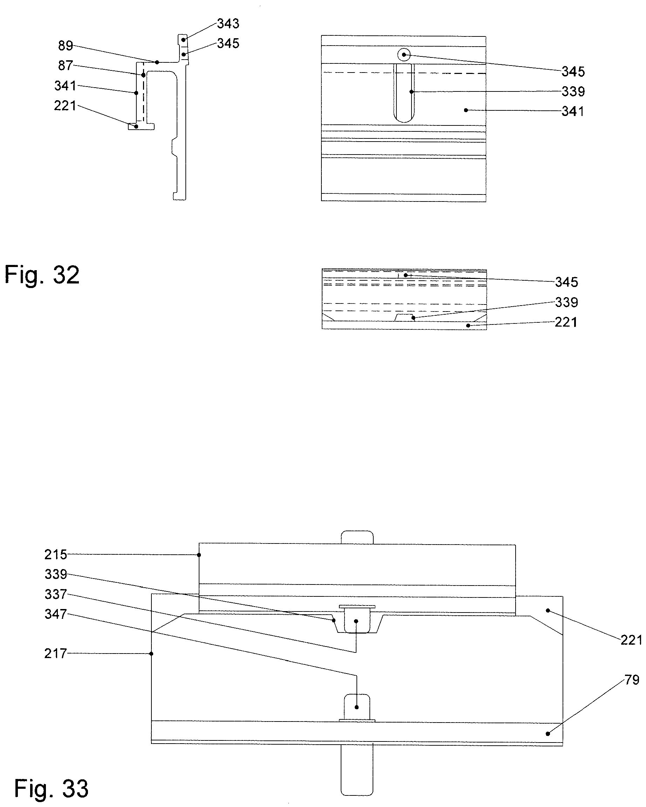

Im gezeigten zweiten Ausführungsbeispiel des Befestigungssystems ist die Verzahnung von Anker 215 und Schiebeteil 219 durch die Hinterschneidungen 99 beim Anker 215 und ein verbreitertes Fussteil 221 am Ende des Schenkels 87 des Schiebeteils 217 realisiert (s.a. Fig. 32). Da das Fussteil 221 breiter ist als die lichte Weite der Kanalöffnung 101 (Fig. 16), kann die Verbindung nur durch eine Relativverschiebung der beiden Teile in Kanallängsrichtung 222, d.h. senkrecht zur Blattebene (Fig. 23 und 31). gelöst werden.

Wie bei den weiter oben beschriebenen Ausführungsformen ist am Rand des Ankers 215 eine Abschrägung 109 vorhanden, die in der Kippsstellung des Fassadenelements als Anschlagfläche dient (Fig. 29). Die der Abschrägung 109 gegenüberliegende Wandung 223 der Kanalöffnung 101 hat die gleiche Schräge wie die Anschlagfläche 109. Dies hat den Vorteil, einerseits, dass beim Einhängen des Fassadenelements, wo dieses in etwa in der gleichen Neigung wie die Schrägen 109, 223 auf den Schenkel 69 des unteren Montageprofils aufgesetzt wird, ausreichend Spiel zwischen dem Schenkel 69 und den gegenüberliegden Wandungen der Kanalöffnung 101 vorhanden ist, und andererseits, dass in der senkrechten Einbauposition des Fassadenelements nurmehr ein geringes Spiel vorhanden ist. Vorteilhaft liegen die diagonal gegenüberliegenden Kanten 225, 227 in der Einbauposition des Fassadenelements am Schenkel 69 an (Fig. 25, 30).

Wie bei den anderen Ausführungsformen gibt es den Anker 215 in den Ausführungsformen mit und ohne Justierschraube. Der Anker 215 gemäss Fig. 30 hat im Kanalgrund 113 eine Bohrung 115 mit einem Schraubengewinde, in welche eine Justierschraube 152 einschraubbar ist. Im Abstand vom Kanalgrund 113 ist ein senkrecht von der Basisplatte 93 abstehender Steg 229 vorgesehen. In der Flucht der Bohrung 115 ist im Steg 229 ein Rundloch 331 vorgesehen, das der Führung des Schraubenschaftes 152 dient.

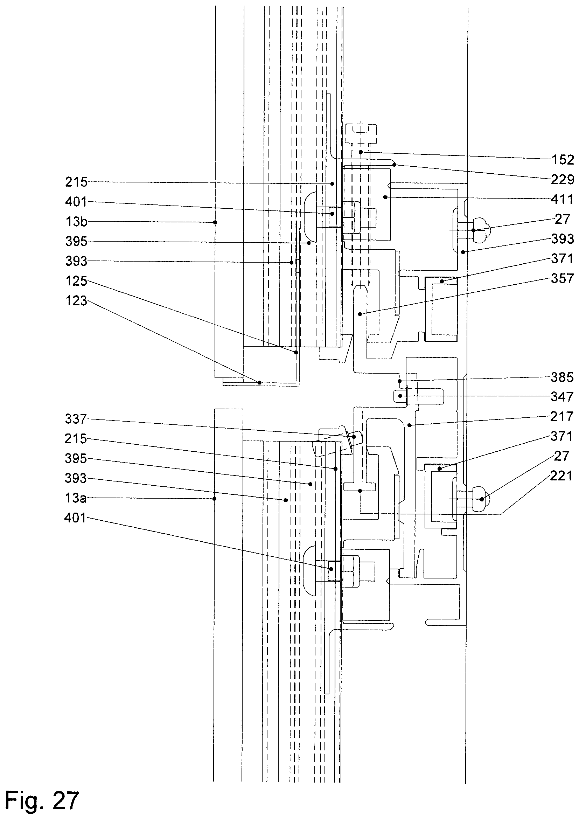

Der Anker ohne Justierschraube gemäss Fig. 31 für den Einsatz am oberen Rand des Fassadenelements konzipiert. Eine Besonderheit des Ankers 215 gegenüber den weiter oben beschriebenen Ausführungsformen ist, dass in ein Rundloch 335 im überstehenden Rand 107 ein unter Federspannung stehender, axial verschieblicher Bolzen 337 eingesetzt ist, welcher in die Kanalöffnung 101 ragt. Der Bolzen 337 ist in die vorgeschobene Position, wie in der Fig. 22 gezeigt, vorgespannt und kann in eine längliche Ausnehmung 339 am Schiebeteil 217 einrasten (s. nachfolgende Beschreibung), um in der Einbauposition eine Relativverschiebung von Anker 215 und Schiebeteil 217 zu verunmöglichen (Fig. 27).

Das Schiebeteil 217 selbst besteht aus einer Grundplatte 79 und einem zur Grundplatte 79 parallelen und beabstandeten Schenkel 87, der mittels eines rechtwinklig abstehenden Steg 89 mit der Grundplatte 79 verbunden ist (Fig. 32). Dabei ist die Ausnehmung 339, in welche der Bolzen 337 des Ankers 215 einrasten kann, an der Aussenseite 341 des Schenkels 87 vorgesehen und erstreckt sich von der Oberkante des Schenkels 87 bis ungefähr zum Kopfteil 221. Die längliche Ausbildung der Ausnehmung 339 ist notwendig, weil die Lage des oberen Ankers relativ zum Schiebeteil 217 in der Einbauposition in einem bestimmten Bereich variieren kann (durch Justierschraube 152 einstellbar).

Im Rand 343 der Grundplatte 79 oberhalb des Stegs 89 ist ein Rundloch 345 vorgesehen, das der Aufnahme eines beweglichen Bolzens 347 dient (Fig. 32). Dabei ragt der bewegliche Bolzen 347 schenkelseitig aus der Grundplatte 79 heraus. Der Bolzen 347 dient als Anschlag, wenn das Schiebeteil 217 am oberen Montageprofil angeordnet ist.

Fig. 33 zeigt die Kombination von Anker 215 und Schiebeteil 217 in der Einbauposition von oben. Es ist erkennbar, dass der bewegliche Bolzen 337 des Ankers 215 in die Ausnehmung 339 des Schiebeteils 217 ragt. Dadurch können sich Anker 215 und Schiebeteil 217 nicht ungewollt relativ zueinander verschieben.

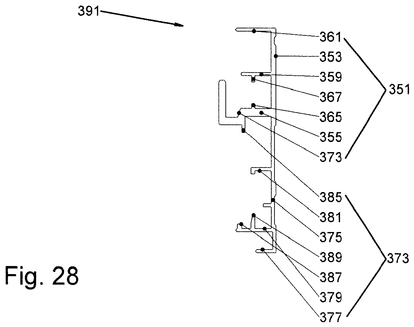

Nachfolgend werden nun noch die Montageprofile der zweiten Ausführungsform näher im Detail beschrieben (Fig. 26, 28) :
Das untere Montageprofil 351 der zweiten erfindungsgemässen Ausführungsform hat eine Basiswand 353 und daran an einem Ende angeformt einen Verbindungssteg 355 mit einem zur Basiswand 353 parallelen Schenkel 357 analog zum Schenkel 69 des Montageprofils 21 (Fig. 25 und 26). Auf der Seite des Schenkels 357 ragen von der Basiswand unterschiedlich lange Stege 359, 361 und 363 rechtwinklich ab, die in Verbindung mit den Vorsprüngen 365, 367 und 369 Aufnahmen für ein Verbindungsprofil 371 definieren (Fig. 25). Der Steg 359 dient dabei gleichzeit als Anschlag für den Anker 215, wenn dieser auf den Schenkel 357 aufgesetzt ist (Fig. 25). Der Schenkel 357 hat im Übrigen eine Länge, die ungefähr der Tiefe des Kanals 97 entspricht. Entsprechend ist grundsätzlich eine Höhenverstellung eines am Anker angeordneten Fassadenelements um knapp die Länge des Schenkels 357 möglich.

Das obere Montageprofil 373 (Fig. 27 und Fig. 28) hat eine Basiswand 375, von welcher die Stege 377, 379, 381 und 383 rechtwinklig abstehen (Fig. 23). Am Steg 383 ist eine Rippe 385 und am Steg 379 sind Rippen 387 und 389 angeformt. Dabei definieren die Rippen 385 und 387 Hinterschneidungen und die Rippe 389 sowie der Steg 381 Anlageflächen für das Schiebeteil 217 (Fig. 27). Der Steg 377 ist optional und kann der Befestigung von Klammern für elektrische Leitungen etc. dienen.

Das mittlere Montageprofil 391 (Fig. 28) stellt wie schon beim ersten Ausführungsbeispiel eine Kombination der beiden Montageprofile 351 und 373 dar, wobei der obere Teil des Montageprofils 391 die Funktionen des unteren Montageprofils 351 und der untere Teil des Montageprofils 391 die Funktionen des oberen Montageprofils 373 aufweist. Entsprechend sind für die entsprechenden Teile des Montageprofils 391 die gleichen Bezugszifferen vewendet wie bei der Beschreibung der Montageprofile 351 und 373.

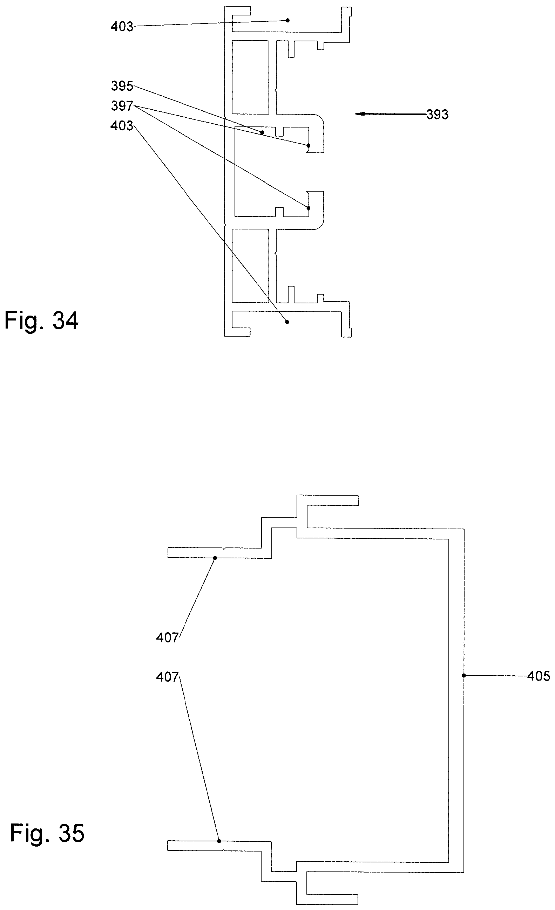

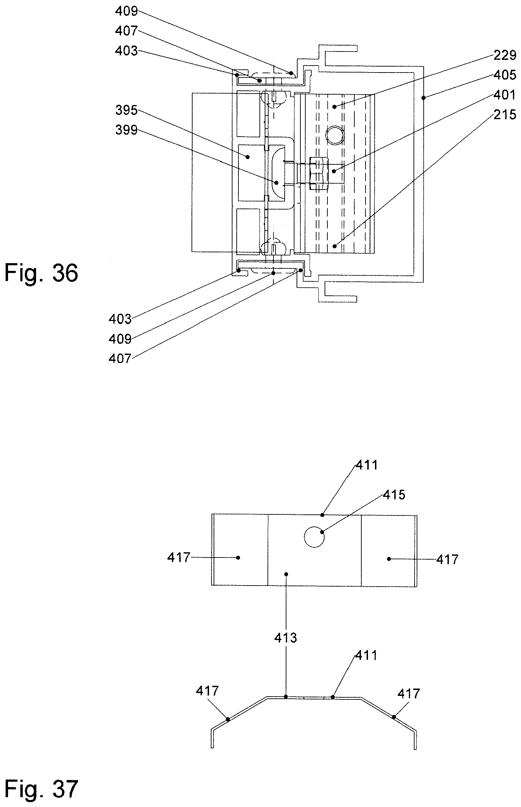

In Fig. 34 ist eine weitere Ausführungsform eines Befestigungsprofils 393 dargestellt. Dieses hat in der Mitte eine Nute 395 mit Hinterschneidungen 397, welche der Aufnahme eines Schraubenkopfes 399 einer Schlossschraube 401 dient (Fig. 36). Mit Hilfe von Schlossschrauben 401 können die Anker an das Befestigungsprofil 393 geschraubt werden.

An gegenüberliegenen Seiten des Befestigungsprofils sind Führungen 403 für ein Verstärkungsprofil 405 vorgesehen, das in Fig. 35 gezeigt ist. Das Verstärkungsprofil 405 kann bei grossen Fassadenelementen, die einem entsprechend grossen Windlasten ausgesetzt sind, über das Befestigungsprofil 393 geschoben werden (Fig. 36). Dabei greifen die Schenkel 407 in die seitlichen Führungen 403 des Befestigungsprofils 393 ein. Befestigungsprofil 393 und Verstärkungsprofil 405 werden sodann mittels Schrauben/Nieten 409 miteinander verschraubt. Das Verstärkungsprofil 405 ist so ausgelegt, dass es über die Anker 215 hinweg geschoben werden kann. Verstärkungsprofile 405 können nur zwischen den Ankern 215/201 eingesetzt werden.

Fig. 37 illustriert eine Blattfeder 411, die mit der Schlossschraube 401 am Anker 215 festgeschraubt werden kann. Die Blattfeder 411 besteht aus einem flachen Mittelteil 413, in welchem ein Rundloch 415 für die Aufnahme der Schlossschraube 401 vorgesehen ist, und zwei abgewinktelten Federschenkeln 417, die an gegenüberliegenden Seiten vom Mittelteil 413 abstehen. Die Blattfeder 411 hat den Zweck ein Verrutschen des Fassadenelements 13 in Längsrichtung der Montageprofile 373, 351 oder 391 zu verhindern (siehe Fig. 23, 25, 27 und 29). Zu diesem Zweck wirkt die Blattfeder 411 zwischen dem Fassadenelement 13 und den Montageprofilen 373, 351 oder 391.

Wie aus den Figuren 25, 27 und 29 ersichtlich ist, liegen die Federschenkel 417 an den Stegen 379 oder 359 an. Die Enden der Stege 379, 359 sind als Spitzen 419 ausgebildet, welche sich in der vertikalen Einbausituation eines Fassadenelements in die endständigen Kanten eingraben können, sodass noch mehr Widerstand gegen eine seitliche Verschiebung vorhanden ist.

Die Erfindung betrifft ein System zur Befestigung von Fassadenelementen 13a,13b, insbesondere von Glasscheiben oder Photovoltaikmodulen, an einer Fassade mit an einer Gebäudewand angeordneten Montageprofilen 21,23,25, 351,373 391 und Verbindungsmittel, die einerseits mit der Rückseite der Fassadenelemente 13a,13b und andererseits mit den Montageprofile 21,23,25, 351,373 391 verbindbar sind. Das Befestigungssystem umfasst Montageprofile einer ersten Art 21 oder 351 und Montageprofile einer zweiten Art 23 oder 373zur im Wesentlichen horizontalen Anordnung an einer Unterkonstruktion einer Gebäudewand, wobei die Montageprofile der ersten 21,351 und zweiten Art 23,373 als ein kombiniertes, einstückiges Montageprofil 25 oder 391 eingesetzt sein können. Weitere Komponenten des Befestigungssystems sind Befestigungsprofile (393) zur Anordnung an der Rückseite der Fassadenelemente (13a,13b),
- ein Anker (19, 215) zur lösbaren Anordnung am Befestigungsprofil 17,147,183, 393, und
- ein verschieblich am Montageprofil der zweiten Art 23,373 anordenbares Schiebeteil 77, 217,
- wobei die Montageprofile 351,373,391, der Anker 19,215 und das Schiebeteil 77,217 ausgebildet sind, um eine erste Formschlussverbindung zwischen dem Anker 19, 215 und dem Montageprofil der ersten Art 21,351 und eine zweite Formschlussverbindung zwischen dem Anker 19,215 und dem Schiebeteil 77,217 zu bilden.

### Legende

- 11: Fassadenkonstruktion
- 13, 13a, 13b: Fassadenelemente
- 15: Bekleidungselement / Glasplatten
- 17: Befestigungsprofil
- 19: Anker
- 21: Unteres Montageprofil
- 23: Oberes Montageprofil
- 25: Mittleres Montageprofil
- 27: Nieten oder Schrauben zur Befestigung der Montageprofile an einer Unterkonstruktion
- 29: Schrauben oder Nieten zur Befestigung der Anker am Befestigungsprofil
- 31,33: Kanäle
- 35: Basiswand
- 37,39,41: Stege
- 43,45,47: Rippen
- 49: Spalt zwischen den Rippen 43, 45
- 50: Spalt zwischen den Rippen 45, 47
- 51,53: Führungsnuten im Kanal 31
- 55,57: Vorsprünge
- 59,61: Führungsnuten im Kanal 33
- 63,65: Vorsprünge
- 67: Nase
- 68: Hinterschnittene Führungsnut
- 69: Schenkel der Nase
- 70: Hinterschnitt
- 71, 73: Führungsnuten des oberen Montageprofils für das Schiebeteil
- 75: Steg
- 77: Schiebling
- 79: Grundplatte
- 81: Führungskanal
- 83a,83b: Wänden des Führungskanals
- 85: Bohrung
- 87: Anschlagsplatte / Wand
- 89: Steg
- 91: Polster (Zellgummi)
- 93: Basisplatte
- 95: Stirnseite
- 97: Kanal
- 99: Hinterschneidung
- 101: Kanalöffnung
- 103: Kanalwand
- 105: Abschrägung an der Aussenseite der Kanalwand
- 107: Rand der Basisplatte
- 109: Abschrägung am Rand/Überstand der Basisplatte
- 111: Bohrungen in der Basisplatte
- 113: Kanalgrund
- 115: Bohrung
- 117: Hohlraum
- 119: Auflagewinkel
- 121: Erste Schenkel
- 123: zweite Schenkel

- 125: Rückseite des Befestigungsprofils 17
- 127: Stossprofil
- 129: Nase
- 131: Kabelklammer
- 133: Spange
- 135: Gebäudewand
- 137: Dämmschicht
- 139: Distanzhalter
- 141: Montageschienen
- 143: Dachabschluss
- 145: Schraubendreher
- 147: Befestigungsprofil, 2. Ausführungsform
- 149: Anker 2. Ausführungsform
- 151: Klemmnut
- 152: Justierschraube
- 153: Absatz
- 154: Führungsabschnitt
- 155a, 155b: Rundlöcher in der Basisplatte 93
- 157: Schlossschraube
- 159: Rückseite
- 161: Obere Kante des Fassadenelements
- 163: Untere Kante des Fassadenelements
- 165: Feststellschraube
- 167: Klebeprofile
- 169: Seitenkanten des Befestigungsprofils
- 171: Klebefuge
- 173: Auflagewinkel (2. Ausführungsform)
- 175: Verbindungsstege
- 177: Seitenwände der Klemmnut
- 179: Zwischenwände
- 181: Nieten zur Befestigung des Auflagewinkels 173
- 183: Befestigungsprofil zur horizontalen Anordnung
- 185: Mittelsteg
- 187: Klemmnuten
- 189: Vierkantabsatz
- 191: Seitenwände der Klemmnuten
- 193: Steg
- 195: Führungsnut
- 197: Schraubenschaft
- 199: Schraubenmutter
- 201: Dritte Ausführungsform des Ankers
- 203: Montageprofil (4. Ausführungsform)
- 205: Seitenwand
- 207: Quersteg der Seitenwand
- 209: Absatz
- 211: Schenkel des z-förmigen Profilabschnitts
- 213: Nase
- 215: Anker (vierte Ausführungsform)
- 217: Schiebeteil
- 219: Formschlussverbindung

- 221: Kopfteil
- 222: Kanallängsrichtung
- 223: Seite der Kanalöffnung
- 225: Innere Kante der Kanalöffnung
- 227: Äussere Kante der Kanalöffnung
- 229: Von der Basisplatte abstehender Steg
- 331: Rundloch
- 333: Schraubenschaftes
- 335: Rundloch
- 337: Bolzen (Anker)
- 339: Ausnehmung am Schiebeteil
- 341: Aussenseite des Schenkels 87
- 343: Rand
- 345: Rundloch
- 347: Bolzen (Schiebeteil)
- 351: Unteres Montageprofil
- 353: Basiswand
- 355: Verbindungssteg
- 357: Schenkel
- 359, 361, 363: Von der Basiswand 353 abstehende Stege
- 365, 367, 369: Vorsprünge
- 371: Verbindungsprofil
- 373: oberes Montageprofil
- 375: Basiswand
- 377,379,381, 383: Stege
- 385,387,389: Rippen
- 391: Kombiniertes Montageprofil
- 393: Befestigungsprofil
- 395: Nute
- 397: Hinterschneidungen
- 399: Schraubenkopf
- 401: Schlossschraube
- 403: Führungen
- 405: Verstärkungsprofil
- 407: Schenkel
- 409: Schrauben
- 411: Blattfeder
- 413: Mittelteil
- 415: Rundloch
- 417: Federschenkel

## Patentansprüche

1. System zur Befestigung von Fassadenelementen, insbesondere von Glasscheiben oder Photovoltaikmodulen, an einer Fassade mit an einer Gebäudewand anzuordnenden Montageprofilen (21,23,25,203), und Verbindungsmittel, die einerseits mit der Rückseite der Fassadenelemente (13) und andererseits mit den Montageprofilen (21,23,25; 351,373,391) verbindbar sind, wobei erste und zweite Montageprofile (21,23; 351,373) zur im Wesentlichen horizontalen Anordnung an einer Unterkonstruktion (139,141) einer Gebäudewand (135) vorgesehen sind und
die Verbindungsmittel folgende Komponenten umfassen:
- ein Befestigungsprofil (17,147,183, 393) zur Anordnung an der Rückseite eines Fassadenelements (13),
- einen ersten und zweitenAnker (19;149;201;215) zur vorzugsweise lösbaren Anordnung am Befestigungsprofil (17,147, 183),
- wobei das erste Montageprofil (21,351) mit dem ersten Anker (19,149, 251), der im Bereich der Unterkante des Fassadenelements am Befestigungsprofil anzubringen ist, eine erste Verbindung realisiert,
- ein Schiebeteil (77,217) am zweiten Montageprofil (23,373) in Montageprofillängsrichtung verschieblich geführt ist,
- das Schiebeteil (77,217) in der Einbauposition mit dem zweiten Anker (19;149;201;215), der im Bereich der Oberkante des Fassadenelements am Befestigungsprofil (17) angeordnet ist, eine zweite Verbindung realisiert, und
- die erste Verbindung derart ausgebildet ist, dass ein Fassadenelement (13) von einer schrägen Kippposition in eine senkrechte Einbauposition verschwenkbar ist,
**dadurch gekennzeichnet,**
**dass** der erste Anker (19,149) geeignet ist, am ersten Montageprofil (21,351) von schräg oben eingehängt zu werden.

2. System nach Anspruch 1, **dadurch gekennzeichnet, dass** der erste Anker (19;149;201;215) am ersten Montageprofil (21,351) einhängbar ist, und die ersten und zweiten Verbindungen Formschlussverbindungen sind.

3. System nach einem der Ansprüche 1 bis 2, **dadurch gekennzeichnet, dass** am zweiten Montageprofil (23,373) Hinterschneidungen (385,387) oder Führungen (71,73) ausgebildet sind, durch welche das Schiebeteil (77,217) in Montageprofillängsrichtung verschieblich gehalten ist.

4. System nach einem der Ansprüche 1 bis 3, **dadurch gekennzeichnet, dass** zur Feststellung des Schiebeteils (77,217) im Abstand von der Oberkante des Schiebeteils ein beweglicher Bolzen (347) in einer Bohrung (345) aufgenommen ist, der vorzugsweise mittels eines Federelements in eine Arretierposition vorgespannt ist, in welcher der Bolzen (347) auf der Vorderseite des Schiebeteils (77,217) vorsteht.

5. System nach einem der Ansprüche 1 bis 4, **dadurch gekennzeichnet, dass** der Anker (215) und das Schiebeteil (217) in der Einbauposition des Fassadenelements miteinander verhakt sind derart, dass das Fassadenelement nicht herunterfallen kann.

6. System nach einem der Ansprüche 1 bis 5, **dadurch gekennzeichnet, dass** der Anker (19;215) einen Kanal (97) mit einer Kanalöffnung (101) mit Hinterschneidungen (99) aufweist und das Schiebeteil (77,217) in der Einbauposition mit einem Schenkel
(87,103) in den Kanal (97) eingreift und darin vorzugsweise formschlüssig gehalten ist.

7. System nach einem der Ansprüche 1 bis 6, **dadurch gekennzeichnet, dass** zwischen dem oberen Anker (215) und dem Schiebeteil (217) zusätzlich eine lösbare Verbindung (337), z.B. eine Rastverbindung, realisierbar ist, welche eine Relativverschiebung von Anker (215) und Schiebeteil (217) verhindert.

8. System nach einem der Ansprüche 1 bis 7, **dadurch gekennzeichnet, dass** in der vertikalen Einpauposition eine dritte Verbindung realisiert ist, welche einer seitlichen Verschiebung des Fassadenelements in Montageschienenlängsrichtung entgegenwirkt oder eine Verschiebung verhindert.

9. System nach Anspruch 8, **dadurch gekennzeichnet, dass** die dritte Verbindung entweder durch Federmittel (411) realisiert ist, welche zwischen einem Befestigungsprofil (393) und einem Montageprofil (373) wirken, oder dadurch realisiert ist, dass das Schiebeteil (77) mittels einer Schraube am zweiten Montageprofil (23,183) feststellbar ist.

10. System nach einem der Ansprüche 1 bis 9, **dadurch gekennzeichnet, dass** der Anker (19) an den Befestigungsprofilen (147, 183) an zwei einander gegenüberliegenden Seiten formschlüssig, z.B. mittels Hinterschneidungen oder Führungen (187,195), gehalten ist.

11. System nach einem der Ansprüche 1 bis 10, **dadurch gekennzeichnet, dass** die Montageprofile (23,25) jeweils zwei Nuten oder Kanäle (31,33) aufweisen, in welche zwecks Verbindung zweier Montageprofile (23,25) ein Stossprofil (127) einschiebbar ist.

12. Fassadenverkleidung mit einem Befestigungssystem gemäss einem der Ansprüche 1 bis 11 und einer Mehrzahl von einzelnen Fassadenplatten,
**dadurch gekennzeichnet,**
**dass** an jede Fassadenplatte mindestens zwei in Abstand voneinader angeordnete Führungsschienen mit je zwei Ankern (19;149;215) montiert sind, dass an einer Gebäudewand erste und zweite Montageprofile (21,23; 351,373) im Wesentlichen horizontal angeordnet sind,
**dass** am zweiten Montageprofil das Schiebeteil (77) in Längsrichtung verschiebbar angeordnet oder anordenbar ist, und
**dass** der Abstand der ersten und zweiten Montageprofile (21,23; 351,373) voneinander so gewählt ist, dass die im Bereich der Unterkante der Fassadenplatte angeordneten Anker (19;201;215) mit dem ersten Montageprofil (21,351) eine erste Verbindung resp. Verzahnung und die im Bereich der Oberkante der Fassadenplatte angeordneten Anker (19;149;201;215) mit dem Schiebeteil (77,217) eine zweite Verbindung resp. Verzahnung eingehen können.

13. Verfahren zur Herstellung einer aus einzelnen Fassadenelementen gebildeten Gebäudefassade unter Verwendung eines Befestigungssystems gemäß einem der Ansprüche 1 bis 11,
**dadurch gekennzeichnet, dass**
die Fassadenelemente an den Montageprofilen, die wiederum an einer Unterkonstruktion einer Gebäudefassade angeordnet sind, befestigt werden,
dass an der Rückseite der Fassadenelemente (13) die Befestigungsprofile (147,183) mit den ersten und zweiten Ankern (19;49;201;215) befestigt werden,
dass an der Gebäudewand in einem Abstand voneinander die Montageprofile (23,25; 351,373) im Wesentlichen horizontal befestigt werden,
dass die Fassadenelemente (13) mittels der ersten Anker (19;149;215) an dem unteren Montageprofil (21;351) eingehängt werden und die erste Verbindung hergestellt wird, und
dass das Fassadenelement (13) dann an dem oberen Montageprofil (23,25; 373) mittels des in Montageprofillängsrichtung verschieblich angeordneten Schiebeteils (77;217) die zweite Verbindung realisiert wird.

14. Verfahren nach Anspruch 13, **dadurch gekennzeichnet, dass** bei der Montage das Fassadenelement (13) nach dem Einhängen am unteren Montageprofil (21;351) gegen das obere Montageprofil (23;373) verschwenkt und danach das Schiebeteil (77;217) mit dem zweiten Anker (19;215) in Eingriff gebracht wird.

## Claims

1. System for fixing facade elements, in particular glass panes or photovoltaic modules, to a face with mounting profiles (21, 23, 25, 203) to be placed on a wall of a building, and connecting means that can be connected on the one hand with the rear side of the facade elements (13) and on the other hand with the mounting profiles (21, 23, 25; 351, 373, 391), wherein first and second mounting profiles (21, 23; 351, 373) are provided for placing substantially horizontally on a sub-construction of a wall of a building (135) and the connecting means comprise the following components:
- a fixing profile (17, 147, 183, 393) for placing to the rear side of a facade element (13),
- a first and a second anchor (19; 149; 201; 215) for the preferably removable arrangement on the fixing profile (17, 147, 183),
- wherein the first mounting profile (21, 351) realizes a first connection with the first anchor (19, 149, 251) that is to be placed in the area of the lower edge of the facade element on the fixing profile,
- a sliding part (77, 217) is displaceably guided on the second mounting profile (23, 373) in the mounting profile longitudinal direction,
- the sliding part (77, 217) realizes a second connection in the mounting position with the second anchor (19; 149; 201; 215) that is placed in the area of the upper edge of the facade element on the fixing profile (17) and
- the first connection is configured in such a manner that a facade element (13) can swivel from an oblique tilting position into a vertical mounting position,
**characterized in**
**that** the first anchor (19, 149) is appropriate to be suspended obliquely from above from a first mounting profile (21, 351).

2. System according to claim 1, **characterized in that** the first anchor (19; 149; 201; 215) can be suspended from the first mounting profile (21, 351) and the first and second connection are form-fitting connections.

3. System according to one of the claims 1 to 2, **characterized in that** undercuts (385, 387) or guides (71, 73) are configured on the second mounting profile (23, 373) by which the sliding part (77, 217) is displaceably held in the mounting profile longitudinal direction.

4. System according to one of the claims 1 to 3, **characterized in that** a movable bolt (347) is received in a bore (345) for locking the sliding part (77, 217) at a distance from the upper edge of the sliding part, bolt that is preferably prestressed by means of a spring element in a locking position in which the bolt (347) projects on the front side of the sliding part (77, 217).

5. System according to one of the claims 1 to 4, **characterized in that** the anchor (215) and the sliding part (217) are interlocked with each other in the mounting position of the facade element in such a manner that the facade element cannot fall off.

6. System according to one of the claims 1 to 5, **characterized in that** the anchor (19; 215) has a channel (97) with a channel opening (101) with undercuts (99) and the sliding part (77, 217) engages in the mounting position with a leg (87, 103) into the cannel (97) and is preferably held therein in a form-fitting manner.

7. System according to one of the claims 1 to 6, **characterized in that** a removable connection (337), for example a latching connection, can be realized additionally between the upper anchor (215) and the sliding part (217), connection that prevents a relative displacement of the anchor (215) and the sliding part (217).

8. System according to one of the claims 1 to 7, **characterized in that** a third connection is realized in the vertical mounting position, this connection counteracting a lateral displacement of the facade element in the mounting rail longitudinal direction or preventing a displacement.

9. System according to claim 8, **characterized in that** the third connection is realized either by spring means (411) that act between a fixing profile (393) and a mounting profile (373) or is realized **in that** the sliding part (77) can be locked by means of a screw on the second mounting profile (23, 183).

10. System according to one of the claims 1 to 9, **characterized in that** the anchor (19) is held in a form-fitting manner on the fixing profiles (147, 183) on two opposed sides, for example by means of undercuts or guides (187, 195).

11. System according to one of the claims 1 to 10, **characterized in that** the mounting profiles (23, 25) have respectively two grooves or channels (31, 33) in which a connecting profile (127) can be inserted for connecting two mounting profiles (23, 25).

12. Facade cladding with a fixing system according to one of the claims 1 to 11 and a multitude of single facade panels,
**characterized in**
**that** at least two guiding rails placed at a distance from one another with two anchors each (19; 149; 215) are mounted on each facade panel,
**that** first and second mounting profiles (21, 23; 351, 373) are placed substantially horizontally on a wall of a building,
**that** the sliding part (77) is placed or can be placed so as to be displaceable on the second mounting profile and
**that** the distance of the first and second mounting profiles (21, 23; 351, 373) from one another is chosen so that the anchors (19; 201; 215) that are placed in the area of the lower edge of the facade panel can realize with the first mounting profile (21, 351) a first connection or interlocking and the anchors (19; 149; 201; 215) that are placed in the area of the upper edge of the facade panel can realize with the sliding part (77, 217) a second connection or interlocking.

13. Method for producing a facade of a building composed of single facade panels by using a fixing system according to one of the claims 1 to 11,
**characterized in**
**that** the facade elements are fixed on the mounting profiles that are then again fixed on a sub-construction of a facade of a building,
**that** the fixing profiles (147, 183) are fixed on the rear side of the facade elements (13) with the first and second anchors (19; 149; 201; 215),
**that** the mounting profiles (23, 25; 351, 373) are fixed substantially horizontally,
**that** the facade elements (13) are suspended from the lower mounting profile (21; 351) by means of the first anchors (19; 149; 215) and the first connection is realized and
**that** the facade element (13) is then suspended from the upper mounting profile (23, 25; 373) by means of the sliding part (77; 217) displaceably placed in the mounting profile longitudinal direction on the upper mounting profile and the second connection is realized.

14. Method according to claim 13, **characterized in that** the facade element (13) swivels during the mounting after having been suspended from the lower mounting profile (21; 351) against the upper mounting profile (23; 373) and then the sliding part (77; 217) engages with the second anchor (19; 215).

## Revendications

1. Système pour la fixation d'éléments de façade, en particulier de vitres ou de modules photovoltaïques, sur une façade avec des profilés de montage (21, 23, 25, 203) à placer sur un mur de bâtiment et des moyens de fixation qui peuvent être reliés d'une part à la face postérieure des éléments de façade (13) et d'autre part aux profilés de montage (21, 23, 25 ; 351, 373, 391), cependant que des premiers et des seconds profilés de montage (21, 23 ; 351, 373) sont prévus pour le placement sensiblement horizontal sur une construction sous-jacente (139, 141) d'un mur de bâtiment (135) et que les moyens de fixation comprennent les composants suivants :
- un profilé de fixation (17, 147, 183, 393) pour le placement sur la face postérieure d'un élément de façade (13),
- un premier et un second ancrage (19 ; 149 ; 201 ; 215) pour le placement de préférence amovible sur le profilé de fixation (17, 147, 183)
- cependant que le premier profilé de montage (21, 351) réalise une première liaison avec le premier ancrage (19, 149, 251) qui doit être placé dans la zone de l'arête inférieure de l'élément de façade sur le profilé de fixation,
- une pièce coulissante (77, 217) est guidée déplaçable sur le second profilé de montage (23, 273) dans le sens longitudinal du profilé de montage,
- la pièce coulissante (77, 217) dans la position de montage réalise une seconde liaison avec le second ancrage (19; 149 ; 201 ; 215) qui est placé dans la zone de l'arête supérieure de l'élément de façade sur le profilé de fixation (17) et
- la première liaison est configurée de manière telle qu'un élément de façade (13) peut être pivoté d'une position de basculement oblique en une position de montage verticale,
**caractérisé en ce**
**que** le premier ancrage (19, 149) est approprié pour être suspendu au premier profilé de montage (21, 351) à partir du haut en oblique.

2. Système selon la revendication 1, **caractérisé en ce que** le premier ancrage (19 ; 149 ; 201 ; 215) peut être suspendu au premier profilé de montage (21, 351) et que la première et la seconde liaison sont des liaisons par complémentarité de forme.

3. Système selon l'une des revendications 1 à 2, **caractérisé en ce que** des contredépouilles (385, 387) ou des guidages (71, 73), par lesquels la pièce coulissante (77, 217) est maintenue déplaçable dans le sens longitudinal du profilé de montage, sont configurés sur le second profilé de montage (23, 273).

4. Système selon l'une des revendications 1 à 3, **caractérisé en ce qu'**un boulon mobile (347) est logé dans une forure (345) pour bloquer la pièce coulissante (77, 217) à une distance de l'arête supérieure de la pièce coulissante, boulon qui est de préférence précontraint au moyen d'un élément de ressort dans une position d'arrêt dans laquelle le boulon (347) fait saillie sur la face antérieure de la pièce coulissante (77, 217).

5. Système selon l'une des revendications 1 à 4, **caractérisé en ce que** l'ancrage (215) et la pièce coulissante (217) sont, en position de montage de l'élément de façade, accrochés l'un à l'autre de telle manière que l'élément de façade ne puisse pas tomber.

6. Système selon l'une des revendications 1 à 5, **caractérisé en ce que** l'ancrage (19 ; 215) présente un canal (97) avec une ouverture de canal (101) avec des contredépouilles (99) et la pièce coulissante s'engrène en position de montage avec un montant (87, 103) dans le canal (97) et y est maintenu de préférence par complémentarité de forme.

7. Système selon l'une des revendications 1 à 6, **caractérisé en ce qu'**en plus une liaison amovible (337), par exemple une liaison par encliquetage, peut être réalisée entre l'ancrage supérieur (215) et la pièce coulissante (217), liaison qui empêche un déplacement relatif de l'ancrage (215) et de la pièce coulissante (217).

8. Système selon l'une des revendications 1 à 7, **caractérisé en ce qu'**en plus une troisième liaison est réalisée dans la position verticale de montage, liaison qui s'oppose à un déplacement latéral de l'élément de façade dans le sens longitudinal du rail de montage ou qui empêche un coulissement.

9. Système selon la revendication 8, **caractérisé en ce que** la troisième liaison est réalisée soit par des moyens de ressort (411) qui agissent entre un profilé de fixation (393) et un profilé de montage (373) ou par le fait que la pièce coulissante (77) peut être bloquée au moyen d'une vis sur le second profilé de montage (23, 183).

10. Système selon l'une des revendications 1 à 9, **caractérisé en ce que** l'ancrage (19) est maintenu sur les profilés de fixation (147, 183) par complémentarité de forme sur deux côtés opposés l'un à l'autre, par exemple au moyen de contredépouilles ou de guidages (187, 195).

11. Système selon l'une des revendications 1 à 10, **caractérisé en ce que** les profilés de montage (23, 25) présentent respectivement deux gorges ou canaux (31, 33) dans lesquels un profil de raccord (127) peut être inséré.

12. Habillage de façade avec un système de fixation selon l'une des revendications 1 à 11 et une multitude de panneaux de façade individuels,
**caractérisé en ce**
**que** des rails de guidage placés à une distance l'un de l'autre sont montés avec respectivement deux ancrages (19 ; 149, 215) sur chaque panneau de façade,
**que** des premiers et des seconds profilés de montage (21, 23 ; 351, 373) sont placés substantiellement horizontaux sur un mur de bâtiment,
**que** la pièce coulissante (77) est placée ou peut être placée coulissante dans le sens longitudinal sur le second profilé de montage et
**que** la distance des premiers et des seconds profilés de montage (21, 23 ; 351, 373) les uns par rapport aux autres est choisi tel que les ancrages ( 19 ; 201 ; 215) placés dans la zone de l'arête inférieure du panneau de façade peuvent établir une première liaison ou imbrication avec le premier profilé de montage (21, 351) et les ancrages ( 19 ; 149 ; 201 ; 215) placés dans la zone de l'arête supérieure du panneau de façade peuvent établir une seconde liaison ou imbrication avec la pièce coulissante (77, 217).

13. Procédé de fabrication d'une façade de bâtiment formée par des éléments individuels de façade en utilisant un système de fixation selon l'une des revendications 1 à 11,
**caractérisé en ce**
**que** les éléments de façade sont fixés aux profilés de montage qui sont à leur tour placés sur une construction sous-jacente d'une façade de bâtiment,
**que** les profilés de fixation (147, 183) sont fixés sur la face postérieure des éléments de façade (13) sont fixés avec les premiers et les seconds ancrages (19 ; 49 ; 201 ;215'),
**que** les profilés de montage (23, 25 ; 351, 373) sont fixés substantiellement horizontaux sur le mur de bâtiment à une distance l'un de l'autre,
**que** les éléments de façade (13) sont suspendus sur le profilé de montage inférieur (21 ; 351) au moyen des premiers ancrages (19 ; 149 ; 215) et que la première liaison est établie et
**que** l'élément de façade (13) est ensuite suspendu sur le profilé de montage supérieur (23, 25 ; 373) au moyen de la pièce coulissante (77 ; 217) placée déplaçable dans le sens longitudinal du profilé de montage et que la seconde liaison est réalisée.

14. Procédé selon la revendication 13, **caractérisé en ce que** lors du montage l'élément de façade (13) pivote après la suspension sur le profilé de montage inférieur contre le profilé de montage supérieur (23 ; 373) et la pièce coulissante est ensuite amenée en prise avec le second ancrage (19 ; 215).
